(19) Europäisches Patentamt / European Patent Office / Office européen des brevets

(11) **EP 1 708 401 B1**

(12) **EUROPÄISCHE PATENTSCHRIFT**

(45) Veröffentlichungstag und Bekanntmachung des Hinweises auf die Patenterteilung:
**19.05.2010  Patentblatt 2010/20**

(51) Int Cl.:
*H04L 1/00* (2006.01)          *H04B 1/69* (2006.01)
*H04B 17/00* (2006.01)

(21) Anmeldenummer: 06117340.7

(22) Anmeldetag: **10.08.2000**

(54) **Übertragungsverfahren mit senderseitiger Frequenz- und Zeitspreizung**

Transmission method with frequency and time spread at transmitter level

Procédé de transmission avec étalement de fréquence et de temps coté émetteur

(84) Benannte Vertragsstaaten:
**AT BE CH CY DE DK ES FI FR GB GR IE IT LI LU MC NL PT SE**

(30) Priorität: **10.08.1999  DE 19937706**
**29.01.2000  DE 10004007**

(43) Veröffentlichungstag der Anmeldung:
**04.10.2006  Patentblatt 2006/40**

(62) Dokumentnummer(n) der früheren Anmeldung(en) nach Art. 76 EPÜ:
**00954617.7 / 1 208 664**

(73) Patentinhaber: **Nanotron Technologies GmbH**
**10555 Berlin (DE)**

(72) Erfinder:
• **Koslar, Manfred**
  **14199, Berlin (DE)**
• **Ianelli, Zbigniew**
  **13355, Berlin (DE)**
• **Hach, Rainer**
  **10589, Berlin (DE)**
• **Holz, Rainer**
  **12159, Berlin (DE)**

(74) Vertreter: **Eisenführ, Speiser & Partner**
**Anna-Louisa-Karsch-Strasse 2**
**10178 Berlin (DE)**

(56) Entgegenhaltungen:
**WO-A-98/20625      WO-A-99/39473**
**DE-A- 3 403 715**

**Beschreibung**

Die Erfindung bezieht sich auf ein Übertragungsverfahren zur breitbandigen drahtlosen oder drahtgebundenen Informationsübertragung über einen mit Störungen und Mehrwegeausbreitung behafteten Kanal unter Anwendung von Spreizverfahren.

Die Verwendung von Spreizverfahren zur Übertragung von Nachrichten ist gut bekannt. So werden im Direct Sequence Spread Spectrum Verfahren (DSSS) die Symbole einer zu übertragenden Datenfolge mit einer festgelegten Code-Folge (Chip-Sequenz, Spreading Code) multipliziert und anschließend übertragen. Abhängig von der Anzahl der Chips in der Code-Folge wird dadurch die Bandbreite der Nachricht erhöht. Das Nachrichtensignal erfährt also vor der Übertragung eine Frequenzspreizung.

Im Empfänger, dem die senderseitig zur Spreizung verwendete Code-Folge bekannt ist, wird die Frequenzspreizung durch Korrelation des Empfangssignals mit der Code-Folge wieder aufgehoben. Das empfangene Signal wird in der Frequenz entspreizt.

Die im Sender und Empfänger zur Kodierung und Dekodierung verwendete Code-Folge hat eine feste zeitliche Länge, die mit der Symboldauer der Datenquelle übereinstimmt. Auf Änderungen der Symboldatenrate kann das System nicht reagieren.

Auch im Frequency Hopping Spread Spectrum Verfahren (FHSS) erfährt das zu sendende Signal eine Frequenzspreizung dadurch, dass Einzelpakete der Datenfolge, gesteuert durch eine Code-Folge (hopping sequence), nacheinander in unterschiedlichen Frequenzbereichen eines gegebenen Nachrichtenkanals übertragen werden. Auch hier wird im Empfänger mit Hilfe der bekannten Hopping Sequenz das empfangene Nachrichtensignal wieder entspreizt.

Beiden Verfahren ist gemeinsam, dass sie für die Übertragung von Nachrichtensignalen eine Übertragungsbandbreite benötigen, die einem festen Vielfachen der Basisbandsignalbandbreite entspricht. Systembedingt also können sowohl das Direct-Sequence- als auch das Frequency-Hopping-Verfahren in Punkt-zu-Punkt-Verbindungen die vorhandene Kanalkapazität nur zu einem Teil ausnutzen. Die erreichbaren Symboldatenraten sind im Vergleich zu anderen Übertragungsverfahren gering. Beide Verfahren sind starr organisiert und können sich einer Änderung des Datenaufkommens, das heißt Änderungen der Symbolrate und damit verbunden der Basisbandsignalbandbreite nicht anpassen.

Eine verbesserte Ausnutzung der Kanalkapazität wird mit dem Einsatz dieser Frequenzspreiztechniken in Mehrfach-Zugriffsverfahren (zum Beispiel DS-CDMA) erreicht. Durch die parallele Verwendung verschiedener Code-Folgen für die einzelnen Teilnehmerstationen sowie durch den Einsatz von Raumdiversity kann auch im CDMA-Verfahren theoretisch die bei gegebener Kanalbandbreite maximale Datenrate erreicht werden. Voraussetzung dafür ist eine Synchronisation auf Chip-Ebene. In der Praxis hat sich jedoch gezeigt, dass die optimalen Werte nicht erreicht werden können.

Durch die geringen Symbolraten sind CDMA-Verfahren vergleichsweise unempfindlich gegenüber Störungen der Übertragung durch Mehrwegeausbreitung. Vorteilhaft ist in diesem Zusammenhang auch, dass sie mit korrelativen Selektionsmethoden arbeiten, also die Kanaltrennung durch Korrelation auf der Zeitachse vornehmen. Da Mehrwegeausbreitung Störsignale erzeugt, die andere Zeitbezüge aufweisen, werden durch die zeitkorrelativen Verfahren nicht nur die Nachbarkanäle, sondern auch die Mehrwegesignale unterdrückt.

Sollen über verfügbare Nachrichtenkanäle Daten mit den höchstmöglichen Datenraten übertragen werden, und soll gleichzeitig eine flexible Verteilung der Bandbreitenressourcen erfolgen, dann muss auf andere Zugriffsverfahren zurückgegriffen werden, beispielsweise auf TDMA-Verfahren, die ein flexibles Einzelkanalmanagement zulassen und mit denen bei optimaler spektraler Ausnutzung des Kanals Datenraten bis zur physikalisch möglichen Grenzdatenrate erreicht werden können.

Erhöht man aber bei vorgegebener Kanalbandbreite die Übertragungsdatenrate, dann steigt gleichzeitig auch die Empfindlichkeit gegenüber Störungen (Verzerrungen) durch Mehrwegeausbreitung. Entsteht bei der Übertragung eines Informationssymbols über einen Nachrichtenkanal ein Delay Spread bestimmter Länge, dann hängt es von der Symbolrate ab, wie viele der nachfolgenden Symbole durch die auftretenden Reflexionen verzerrt werden. Je höher die Symbolrate ist, desto komplexer werden die Verzerrungen des Symbolstroms und desto schwieriger ist auch die Kompensation (Equalisation) der Multipath-Effekte im Empfänger.

Alle bekannten Verfahren zur Equalisation setzen eine sehr genaue Bestimmung der Kanalparameter voraus. Zu ihrer Ermittlung ist es Stand der Technik, eine Kanalschätzung (Kanalvermessung) durchzuführen. Die Ausgangsgröße dieser Schätzung ist die Impulsantwort des Kanals.

Für die Vermessung von drahtlosen Kanälen gehört es zum Stand der Technik [DE 34 03 715 A1], Signale mit guten autokorrelativen Eigenschaften, im folgenden "Korrelationssignale" genannt, einzusetzen. Die guten Eigenschaften eines Korrelationssignals bestehen darin, dass die Autokorrelation des Signals, die definitionsgemäß eine Funktion der Zeitverschiebung ist, ein ausgeprägtes Maximum bei Zeitverschiebung null besitzt, während zu allen anderen Zeitverschiebungen die Autokorrelation möglichst niedrige Betragswerte aufweist. Anschaulich bedeutet dies, dass die Autokorrelation des Korrelationssignals einen möglichst schmalen Puls mit wenig Ein- und Ausschwingen darstellt. Es sind verschiedene Familien von Korrelationssignalen bekannt. Unter anderem gehören die oft erwähnten und in der Praxis mittels zeitdiskreter Signalverarbeitung realisierten Pseudonoise (PN)-Sequenzen zu den Korrelationssignalen. Um die begrifflichen Eindeutigkeit sicherzustellen, soll die Untermenge der zeitdiskreten Korrelationssignale hier als Korrelationsfolgen definiert werden. Als weitere Beispiele für Korrelationsfolgen seien M-Folgen und Frank Zadoff Chu-Folgen genannt.

Aus der CDMA-Technologie (Direct-Sequence-CDMA) ist es bekannt, Korrelationsfolgen zur Informationsübertragung und zur Kanalselektion in Mehrfachzugriffssystemen einzusetzen. Hierbei sind nicht nur die autokorrelativen Eigenschaften einer Folge von Bedeutung sondern auch die kreuzkorrelativen Eigenschaften innerhalb einer Familie von Folgen. Innerhalb einer Familie mit guten korrelativen Eigenschaften hat die Kreuzkorrelation zwischen zwei beliebigen unterschiedlichen Folgen dieser Familie niedrige Betragswerte im Vergleich zu dem Maximum der Autokorrelation jeder Folge der Familie.

In der Kommunikationstechnik wird auch der Einsatz von Chirp-Impulsen zur Vermessung bestimmter Kanaleigenschaften leitungsgebundener Telefonkanäle [T. Kamitake: "Fast Start-up of am Echo Canceller in a 2-wire Fullduplex Modem", IEEE proc. of ICC'84, pp360-364, May 1984, Amsterdam, Holland] beschrieben.

Chirp-Signale, deren besondere Eignung für Messzwecke aus der Radartechnik bekannt ist, lassen sich ebenfalls als Korrelationssignale und bei zeitdiskreter Verarbeitung als Korrelationsfolgen interpretieren. Gegenüber den üblicherweise verwendeten PN-Sequenzen sind Chirp-Signale jedoch komplexwertig und weisen eine Vielzahl von Phasenzuständen auf. Weiterhin existieren Vorschläge [US 5,574,748], Chirp-Signale für die Informationsübertragung über drahtlose und drahtgebundene Kanäle zu verwenden.

Aus dem Dokument WO 98/20625 ist ein Verfahren zur drahtlosen Übertragung einer Nachricht bekannt, bei dem Chirp-Signale als Träger von Information verwendet werden. Zur Aufprägung der Information auf das Chirp-Signal können Impulsmodulationsverfahren verwendet werden oder eine vor Aussendung des Chirp-Signals vorgenommene Trägerkompression für verschiedene Zustände des Nachrichtensignals in auswertbar unterschiedlicher Weise vorgenommen werden.

Aus dem Dokument WO 99/39473 ist ein Nachrichtenübertragungsverfahren bekannt, bei dem ein adaptives Frequenzhüpfen zur Erhöhung der Übertragungsqualität in Gegenwart von Interferenzeffekten erzielt wird.

Zum Stand der Technik kann zusammenfassend gesagt werden, dass bei den bekannten Verfahren zur Frequenzspreizung der Vorteil der Störsicherheit einhergeht mit geringen Symbolraten und mit einer geringen spektralen Effizienz. Eine flexible Verteilung der Ressourcen, eine Anpassung der Systeme an sich ändernde Symbolraten, an variable Bandbreitenanforderungen ist mit den bestehenden Verfahren nicht zu erreichen.

Um bei gleicher Bandbreite Nachrichten mit hohen Symbolraten zu übertragen, muss derzeit auf andere Übertragungstechniken ohne Frequenzspreizung zurückgegriffen werden, die einen wichtigen Vorzug der Spreizverfahren, die Robustheit gegen Schmalbandstörungen, nicht aufweisen. Dazu kommt in jedem Fall die Empfindlichkeit der Übertragung gegen Mehrwegeausbreitung, die den Einsatz von E-qualizer-Schaltungen und als Voraussetzung dafür eine sehr genaue Bestimmung der Kanaleigenschaften verlangt.

Die Aufgabe der Erfindung ist es, zur Übertragung von Nachrichten über durch Mehrwegeausbreitung gestörte Kanäle ein Mehrfachzugriffsverfahren zu schaffen, das es erlaubt, Signale mit hoher Symbolrate zu übertragen und das bei maximaler spektraler Effizienz flexibel auf Änderungen des Datenaufkommens und auf teilnehmerbezogen variable Anforderungen an Übertragungsgeschwindigkeit und Bitfehlerrate reagieren kann.

Die Erfindung löst diese Aufgabe durch ein Übertragungsverfahren und eine Steuervorrichtung mit den Merkmalen nach Ansprüchen 1 und 20. Vorteilhafte Weiterbildungen sind in den Unteransprüchen, der Beschreibung und den Zeichnungen beschrieben.

Der vorliegenden Erfindung liegt die Erkenntnis zugrunde, in einem. Kommunikationssystem, in dem Informationssymbole sequentiell übertragen werden, für jedes Informationssymbol sowohl eine Frequenzspreizung durch Quasidiracpulsformung als auch eine Zeitspreizung durch Faltung des frequenzgespreizten Informationssymbols mit einem Korrelationssignal so durchzuführen, dass für jede Eingangsdatenrate stets die auf Grund der Bandbreite maximal mögliche Frequenzspreizung und die aus realisierungstechnischen Gründen sinnvolle maximale Zeitspreizung der zu übertragenden Informationssymbole sichergestellt ist, was wiederum zu einer minimalen Störanfälligkeit führt. Die bei hohen Datenraten auftretende zeitliche Überlappung der Korrelationssignale führt zu einer Intersymbolinterferenz, die bei geeigneter Wahl der Korrelationssignale und/oder bei korrekter Filtereinstellung vernachlässigter ist.

Weiterhin wird dasselbe Korrelationssignal ( z.B. Chirp-Signal), das für die Übertragung eines einzelnen Informationssymbols benutzt wird, auch für die Kanalvermessung eingesetzt, was sich stark vereinfachend auf die Struktur des Empfängers auswirkt.

Die Erfindung wird nachfolgend anhand eines in Zeichnungen dargestellten Ausführungsbeispiels näher erläutert. Es zeigen:

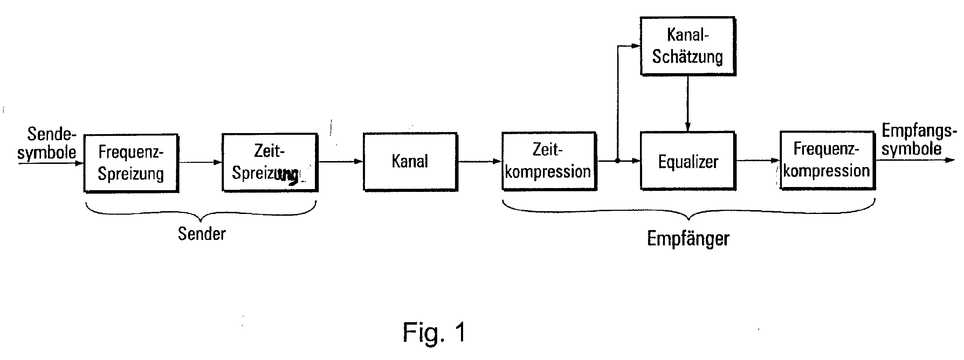

Figur 1                          ein Blockschaltbild eines erfindungsgemäßen Übertragungssystems;

| | |
|---|---|
| Figur 2 | ein Blockschaltbild einer alternativen Ausführungsform des erfindungsgemäßen Übertragungsverfahrens; |
| Figur 3 | ein weiteres Ausführungsbeispiel der Erfindung anhand eines Blockschaltbildes; |
| Figur 4 | ein Blockschaltbild einer weiteren Variante der Erfindung; |
| Figur 5 | ein Blockschaltbild einer Taktsteuerung im Empfänger; |
| Figur 6 | Signaldiagramme von Signalen aus Figur 3; |
| Figur 7 | Programmablaufplan für eine Kanalschätzung; |
| Figur 8 | Hüllkurve eines komprimierten Chirp-Impulses; |
| Figur 9.1 a | Diagramm: Signal-Rauschverhältnis / Kanaldatenrate; |
| Figur 9.1b | Darstellung von Signalen am Ausgang eines empfangsseitigen Kompressionsfilters; |
| Figur 9.2a | Signaldarstellung einer breitbandigen Übertragungsstörung; |
| Figur 9.2b | Spektrendarstellung eines Sendesignals und der dieses überlagernden breitbandigen Störung; |
| Figur 9.2c | ein Blockschaltbild mit additiver Überlagerung eines Sendesignals und impulsförmiger Störungen; |
| Figur 9.2d | Signaldarstellung komprimierter Chirp-Impulse und gedehnter Störanteile; |
| Figur 9.3 bis Figur 9.8 | Programmablaufpläne für ein erfindungsgemäßes Zugriffsverfahren; |
| Figur 9.9 | Darstellung eines TDMA-Rahmens mit mehreren Teilnehmer-Zeitschlitzen unterschiedlicher Breite; |
| Figur9.10a und Figur 9.10b | Darstellung des TDMA-Rahmens mit Zeitslots unterschiedlicher Breite und schematische Darstellung zum Signal-verlauf nach empfängerseitiger Kompression; |
| Figur 9.11 | Formeldarstellung zur Berechnung der Spitzenamplituden von empfängerseitig komprimierten Signalen in verschiedenen Zeitschlitzen nach Figur 9.10; |
| Figur 9.12 | Darstellung für die Änderung von Zeitschlitz-(Slot)-Daten bei geänderten Systemanforderungen (gegenüber Fig. 9.10); |
| Figur 9.13 | Formeldarstellung für die Berechnung der Spitzenamplituden der empfängerseitig komprimierten Signale nach Figur 9.12; |
| Figur 9.14 | Darstellung der Einhüllenden des Sendesignals nach Figur 9.9, |

Figur 1 zeigt den vereinfachten Aufbau des erfindungsgemäßen Übertragungssystems. Die zu übertragenden Informationssymbole erfahren zunächst eine Frequenzspreizung. Bei zeitkontinuierlicher Signalverarbeitung geschieht dies durch Umwandlung in Pseudodiracpulse mit anschließender Bandpassfilterung. Bei zeitdiskreter Signalverarbeitung bewirkt die Operation der Hochtastung (Erhöhung der Abtastrate, "upsampling") eine Frequenzspreizung.

Im nächsten Schritt erfolgt die Zeitspreizung der frequenzgepreizten Symbole. Beispielsweise erfolgt dies durch Faltung mit einer Korrelationsfolge. Es folgt der Übertragungskanal, wobei evtl. vorhandene Modulations-, ZF- und HF-Stufen als Teil des Übertragungskanals angesehen werden. Das empfangene mit Störungen behaftete Signal durchläuft nun eine Zeitkompression zum Beispiel durch Faltung mit der zeitinvertierten konjugiert-komplexen Korrelationsfolge.

Die anschließend auftretenden Symbole ermöglichen eine gute Kanalschätzung, was wiederum den Einsatz bekannter Equalizer auch für hohe Symbolraten zulässt. Im letzten Schritt erfolgt eine Frequenzkompression, die zum Beispiel durch ein Sample & Hold-Glied oder ein Integrate and Dump Glied realisiert wird.

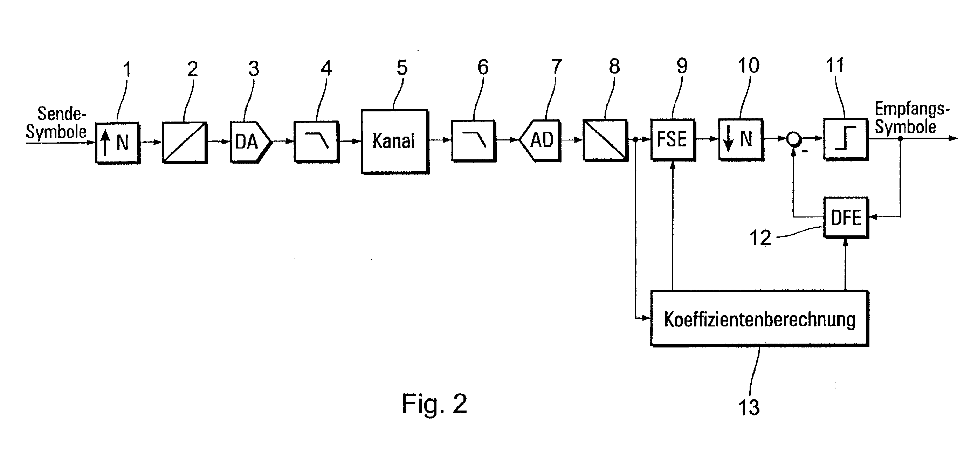

Ein (konkretes) Ausführungsbeispiel der Erfindung in digitaler und damit zeitdiskreter Signalverarbeitungstechnik ist in Figur 2 dargestellt. Ein Folge von Sendesymbolen, bei der jedes Element eine komplexe Zahl aus einem Symbolalphabet darstellt, liegt mit einem Symboltakt am Eingang der Anordnung. Diese Folge wird um den Faktor N hochgetastet 1, indem die Abtastrate erhöht und mathematische Nullen (keine Information) eingefügt werden, was einer Frequenzspreizung entspricht. Die hochgetastete Folge durchläuft ein Sendefilter 2, dessen Impulsantwort der gewählten Korrelationsfolge entspricht. Physikalisch bedeutet dies, dass jedes Symbol die komplette Korrelationsfolge multipliziert mit dem Symbolwert auslöst. Mathematisch entspricht dies der Faltung der hochgetasteten Folge mit der Korrelationsfolge, wobei eine Zeitspreizung des Einzelsymbols eintritt. Das resultierende Signal durchläuft einen Digitalanalog-Konverter 3 und anschließend einen Ausgangstiefpass 4. Es folgt der Übertragungskanal 5, der in diesem Beispiel alle eventuell vorhandenen sonstigen Übertragungsglieder wie Verstärker-, Misch-, ZF- und HF-Stufen beinhalten möge.

Auf der Empfängerseite durchläuft das Signal zunächst einen Eingangstiefpass 6 und anschließend einen Analogdigital-Konverter 7. Das digitalisierte Signal wird nun auf ein Empfangsfilter 8 geführt, das einen gegenüber dem Sendefilter 2 konjugiert komplexen Frequenzgang aufweist. Dadurch findet eine Zeitkompression statt. Für den Fall, dass auf der Sendeseite ein einzelnes. Referenzsymbol ausgesendet wurde, erscheint am Ausgang des Empfangsfilters direkt und ohne zusätzlichen Aufwand die Kanalimpulsantwort.

Damit können sofort die Koeffizienten eines Entzerrers oder Equalizers. nach bekannten Algorithmen [K.D. Kammayer: Nachrichtenübertragung 2 Aufl, Stuttgart 1996, 181ff ...] berechnet werden. Im vorliegenden Beispiel wird ein "Fractional Spaced Equalizer", FSE, in Kombination mit einem "Decision-Feedback-Equalizer", DFE, eingesetzt [S. Qureshi: Adaptive Equalization, IEEE Communications Magazine, vol 20March1982,pp9-16].

Das Signal durchläuft nun den FSE 9, der ein lineares Filter darstellt, wodurch ein Teil der Verzerrungen, die das Signal durch den Kanal erfahren hat, kompensiert werden. Anschließend wird das Signal um den Faktor N heruntergetastet, 10. Die Heruntertastung ist eine Reduzierung der Abtastrate, bei der nur jeder N-te Werte weitergereicht wird. Schließlich folgt eine Entscheidungsstufe 11, in der entschieden wird, um welches Symbol aus dem vereinbarten Alphabet es sich bei dem vorliegenden Symbol handelt. Diese Entscheidung wird schließlich in den DFE 12 zurückgekoppelt Dadurch werden weitere Kanal-Verzerrungen in dem Signal kompensiert.

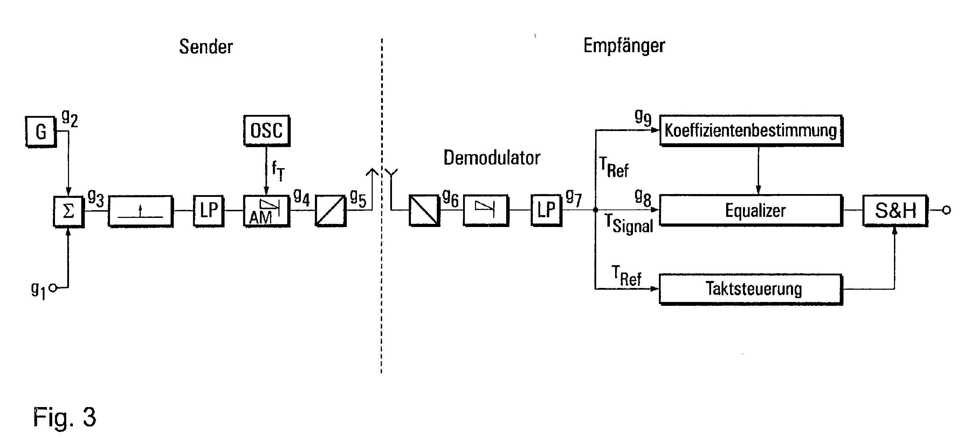

In einem weiteren Ausführungsbeispiel, dargestellt in Figur 3, werden Referenzsymbole zur Bestimmung der Kanaleigenschaften in einem speziellen Messintervall dem zu übertragenden Datenpaket, bestehend aus Informationssymbolen, vorangestellt. Unter Anwendung der Kombination von Frequenz- und Zeitspreizverfahren werden die Referenz- und Informationssymbole zum Empfänger übertragen. Die im Messintervall aufgrund der Mehrwegeausbreitung entstandenen Verzerrungen der Referenzsymbole werden aufgezeichnet, analysiert und direkt zur Bestimmung der Koeffizienten für den Equalizer verwendet.

Um die Kanalmessung mit der erforderlichen hohen Genauigkeit durchzuführen, müssen die Referenzsymbole mit einem hohen Signal zu Rausch-Verhältnis übertragen werden. Ferner müssen die Referenzsignale eine hohe Auflösung auf der Zeitachse haben, um die Phasenlage der Multipath-Anteile genau bestimmen zu können. Beiden Forderungen wird durch die frequenz- und zeitgespreizte Übertragung der Referenzsymbole entsprochen.

Als Korrelationsfolge zur Zeitspreizung und zur zeitlichen Kompression der Symbole wird im Beispiel ein Chirp-Impuls verwendet. Bei Chirp-Impulsen handelt es sich um linear frequenzmodulierte Impulse konstanter Amplitude der Dauer T, innerhalb derer sich die Frequenz von einer unteren zu einer oberen Frequenz stetig linear steigend oder fallend ändert. Die Differenz zwischen oberer und unterer Frequenz stellt die Bandbreite B des Chirp-Impulses dar.

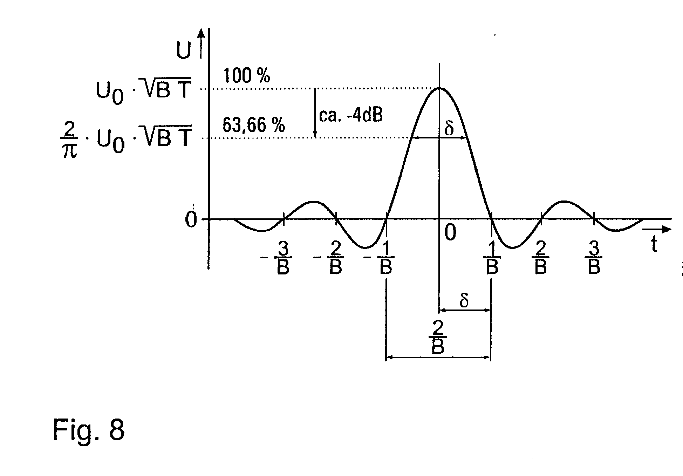

Die Gesamtdauer T dieses Impulses, multipliziert mit der Bandbreite B des Impulses, wird als Dehnungs- oder Spreizfaktor $\psi$ bezeichnet, es gilt: $\psi = B\,T$. Passiert ein derartiger Chirp-Impuls ein in der Frequenz-Laufzeit-Charakteristik entsprechend angepasstes Filter, dann entsteht ein zeitlich komprimierter Impuls mit einer sinx/x-ähnlichen Hüllkurve (Figur 8), deren maximale Amplitude gegenüber der Eingangsamplitude um den Faktor $\sqrt{BT}$ überhöht ist.

Das heißt, das Verhältnis von Ausgangsspitzenleistung zu Eingangsleistung ist gleich dem BT-Produkt des Chirp-Impulses, der Grad der Überhöhung $P_{out\_max}/P_{in}$ ist bei gegebener Bandbreite durch die Impulsdauer T des Sendeimpulses frei einstellbar. Der komprimierte Impuls hat die volle Bandbreite B, seine mittlere Irrpulsdauer beträgt 1/B. Die erreichbare Zeitauflösung ist damit allein durch die Übertragungsbandbreite bestimmt. Zwei benachbarte komprimierte Impulse sind noch voreinander zu trennen, wenn sie einen Abstand von mindestens 1/B besitzen, das heißt, wenn die unkomprimierten Chirp-Impulse um genau diesen Abstand gegeneinander versetzt sind.

Der Vorgang der Kompression ist reversibel; ein Trägerfrequenzimpuls mit sinx/x-ähnlicher Hüllkurve kann mit einem dispersiven Filter geeigneter Frequenz-Gruppenlaufzeit-Charakteristik in einen Chirp-Impuls annähernd konstanter Amplitude transformiert werden. Der sin x/x-ähnliche Impuls erfährt dabei eine zeitliche Spreizung um den Faktor BT.

Im Sender erzeugte, über einen störungsbehafteten Kanal übertragene und im Empfänger komprimierte Chirp-Impulse sind im S/N gegenüber unkomprimierten Signalen stark bevorteilt. Der besondere Vorteil, der Chirp-Signale (oder allgemein zeitgespreizte Signale) für Kanalmessungen prädestiniert, ist ihr Systemgewinn im Signal zu Rausch-Verhältnis durch die empfängerseitige zeitliche Kompression, der sich bei Angabe in dB zu $10 \cdot \log(BT)$ errechnet

Im folgenden Beispiel sollen Informationssymbole der Symbolrate D über einen Nachrichtenkanal der Bandbreite B übertragen werden.

Als Korrelationsfolge zur Zeitspreizung dient ein Chirp-Impuls der Länge T. Für jedes einzelne Symbol wird ein derartiger Chirp-Impuls, gewichtet mit dem Symbolwert, erzeugt. Ein Symbol wird demnach zeitlich auf eine Länge von T gespreizt. Der Abstand $\Delta t$ benachbarter Chirp-Impulse folgt dann direkt aus der Symbolrate D[baud] und beträgt $\Delta t = 1/D$. Abhängig von diesem Impulsabstand können sich die entstehenden Chirp-Impulse zeitlich überlappen. Die Anzahl n der Impulse, die sich zu einem Zeitpunkt überlappen, bestimmt sich als Quotient aus Chirp-Dauer T und Impulsabstand $\Delta t$.

Zur Übertragung der gespreizten Signale wird in einer Sendeperiode die maximal verfügbare Sendeleistung P ausgesendet. Diese Leistung teilt sich auf in die n-fach überlappenden Chirp-Impulse. Jeder einzelne Chirp-Impuls wird also mit einer Leistung von P/n übertragen.

Durch die zeitliche Kompression im Empfänger erfährt ein Chirp-Impuls eine Leistungsüberhöhung von $P_{out\_max}$ / $P_{jn} = B \cdot T$. Werden mit der Eingangsleistung $P_{in}$ n-fach überlappende Chirp-Impulse empfangen und komprimiert, dann beträgt die Spitzenleistung eines einzelnen Impulses $P_{out\_max} = P_{jn} \cdot B \cdot T/n$.

Erfindungsgemäß wird für die zeitliche Spreizung der Informationssymbole und der Referenzsymbole (für die Kanalschätzung), dieselbe Korrelationsfolge eingesetzt. Um die im Messintervall gesendeten Referenzsymbole gegenüber den Informationssymbolen des Datenpakets im S/N bevorzugt zu übertragen, genügt es, bei konstanter Spitzenleistung den Symbolabstand der Referenzsymbole so weit zu vergrößern, dass sich weniger Impulse überlappen, dass also der Wert n sinkt.

Ist der Impulsabstand $\Delta t$ gleich oder größer als die Chirp-Dauer T, dann wird ein Chirp-Impuls mit der vollen Sendeleistung P übertragen. Die Spitzenleistung nach empfängerseitiger Kompression beträgt dann: $P_{out\_max} = P_{in} \cdot B \cdot T$.

Im einfachsten Fall ist die Bedingung $\Delta t = T$ erfüllt, wenn im Messintervall nur ein einziger Referenzimpuls gesendet wird. Im vorgestellten Beispiel werden zwei Referenzimpulse übertragen. Gezeigt wird, dass ihr zu wählender Abstand nicht nur von der Chirplänge, sondern zusätzlich vom erwarteten Delay Spread der Übertragungsstrecke abhängig ist.

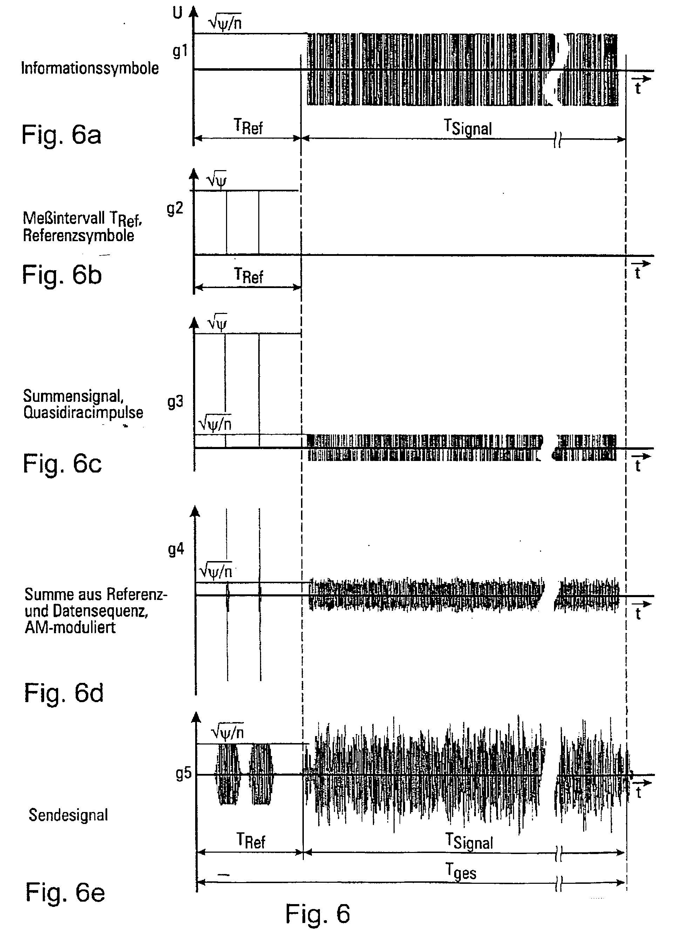

Das Eingangssignal g1 (siehe Figuren 3 und 6a) enthält die zu übertragenden Informationssymbole, die in Datenpaketen der Länge $T_{signal}$ zusammengefasst sind. Im Beispiel ist g1 ein aus bipolaren Rechteckimpulsen bestehendes Signal.

Ein Impulsgenerator G generiert in dem mit $T_{Ref}$ bezeichneten Messintervall eine Folge von (im Beispiel zwei) Referenzsymbolen g2, deren Position in Figur 6b dargestellt ist. Erzeugt werden rechteckförmige Impulse, die in der Impulsleistung gegenüber den Impulsen des Signalintervalls um den Faktor $n = D \cdot T$ erhöht sind, (D ist die Symbolrate im Signalintervall, T die Chirp-Dauer und n ist die Anzahl der sich nach der Zeitspreizung überlappenden Impulse im Signalintervall.)

Entsprechend dem zu erwartenden maximalen Delay Spread der Übertragungskanals wird der zeitliche Abstand beider Referenzsymbole mindestens so groß gewählt, dass die bei der Übertragung auftretenden Reflexionen des ersten Referenzsymbols im Intervall zwischen den Impulsen vollständig abgebildet werden können.

Da sich das Signalintervall $T_{signal}$ und das Messintervall $T_{Ref}$ nicht überlappen, können das Eingangssignal g1 und das Referenzsignal g2 mit Hilfe eines Summationsgliedes überlagerungsfrei addiert werden.

Das Summensignal g3 wird anschließend einem Impulsformer zugeführt, der jeden Rechteckimpuls des Summensignals in einen Quasidiracimpuls gleicher Energie umwandelt und damit die eigentliche Frequenzspreizung vornimmt. Die entstandene Folge von Nadelimpulsen (Figur 6c) wird einem Tiefpassfilter zugeführt und damit auf die halbe Übertragungsbandbreite bandbegrenzt. Das Laufzeitverhalten des Tiefpassfilters weist kurz vor der Grenzfrequenz eine Überhöhung auf, so dass die einzelnen Nadelimpulse jeweils in si-Impulse transformiert werden, deren Form der bekannten si-Funktion $si(x) = sin(x)/x$ entspricht.

Im Anschluss daran wird die si-Impulsfolge einem Amplitudenmodulator (ausgeführt z.B. als Vierquadranten-Multiplizierer) zugeführt, der diese Signale auf eine Trägerschwingung der Frequenz $f_T$ aufmoduliert, die von einem Oszillator erzeugt wird, so dass am Ausgang des Amplitudenmodulators, wie in Figur 6d dargestellt, Trägerfrequenzimpulse mit einer impulsweise si-förmigen Hüllkurve erzeugt werden. Das Ausgangssignal des Amplitudenmodulators hat die Bandbreite des Übertragungskanals. Anders ausgedrückt: Die Folge aus Referenz- und Informationssymbolen hat eine Frequenzspreizung auf die volle Kanalbandbreite erfahren.

Die auf diese Weise erzeugten Impulse haben im Übertragungsfrequenzbereich ein annähernd rechteckförmiges Leistungsdichtespektrum. Deshalb können die Referenzimpulse des Messintervalls in idealer Weise als Testsignal zur Bestimmung der Impulsantwort des Kanals verwendet werden.

Dem Amplitudenmodulator ist ein Dispersionsfilter (Chirp-Filter) nachgeschaltet, welches das modulierte Trägersignal g4 entsprechend seiner frequenzabhängigen differentiellen Laufzeitcharakteristik filtert (Zeitspreizung). Dieser Vorgang entspricht der Faltung des Trägersignals mit der Gewichtsfunktion des Chirp-Filters. Im Ergebnis dieser Operation wird jeder einzelne der Trägerfrequenzimpulse in einen Chirp-Impuls transformiert und damit auf der Zeitachse gespreizt (Figur 6e). Im Messinterwall erscheinen die von Überlagerungen freien Referenz-Chirp-Impulse jeweils mit der gleichen Leistung, die im Signalintervall zur Übertragung von n überlappenden Chirp-Impulsen aufgewendet wird. Gegenüber einem Einzelimpuls des Datenpaketes werden sie also mit n-facher Leistung erzeugt und damit mit einem um den Faktor n besseren Signal- zu Rausch-Verhältnis übertragen.

Das Ausgangssignal des dispersiven Filters wird über den Nachrichtenkanal zum Empfänger übertragen. Mit zum Nachrichtenkanal gerechnet werden hier auch alle sonstigen Übertragungsglieder wie Sendeendstufe, Empfangsfilter, Empfangsverstärker usw.

Das Empfangssignal! g6, das die Chirp-Impulse des Messintervalls und des Datenpakets sowie die Reflexionen dieser Impulse enthält, passiert ein dispersives Filter, dessen frequenzabhängige differentielle Gruppenlaufzeitcharakteristik komplementär zur Charakteristik des senderseitigen dispersiven Filters ist. Dabei werden die einzelnen Chirp-Impulse zeitlich komprimiert, d.h. in TrägerfrequenzImpulse mit sin(x)/x-ähnlicher Hüllkurve umgewandelt.

Da die überlagerten Reflexionen der übertragenen Chirp-Impulse wiederum Chirp-Impulse sind, das heißt, die gleiche Frequenz-Zeit-Charakteristik aufweisen, werden auch sie in der gleichen Weise komprimiert.

Das Ausgangssignal des dispersiven Filters wird anschließend einem Demodulator und einem nachgeschalteten Tiefpassfilter zugeführt, der das Signal von der hochfrequenten Trägerschwingung befreit. Am Ausgang des Tiefpasses liegt das komprimierte und demodulierte Signal g7 vor, dem infolge der Mehrwegeausbreitung Störungen überlagert sind.

In dem sich anschließenden Block "Koeffizientenbestimmung" werden die Signale im Messintervall $T_{Ref}$ ausgewertet. Innerhalb dieses Intervalls liegt das komprimierte und demodulierte Referenzsignal inklusive der überlagerten Multipath-Reflexionen vor. Zur Kanalschätzung steht damit ein Echogramm zur Verfügung, das die auf dem Übertragungsweg überlagerten Reflexionen mit sin(x)/x-förmigen Nadelimpulsen abbildet.

Die ermittelte Impulsantwort des Übertragungskanals wird dem Equalizer übergeben, der die innerhalb der Signal periode $T_{signal}$ den Informationssymbolen überlagerten Reflexionsanteile kompensiert. Das Ausgangssignal des Equalizers wird an eine Sample-and-Hold-Stufe geführt. Damit wird dieses Signal im Frequenzbereich wieder entspreizt. Im Ergebnis dieses Vorgangs liegen die übertragenen Symbole wieder in Form von Rechteckimpulsen vor.

Aufgrund ihrer hohen zeitlichen Auflösung und der besonders gegen Störungen gesicherten Übertragung können die demodulierten Referenzimpulse auch zur Taktsteuerung des Empfängers herangezogen werden.

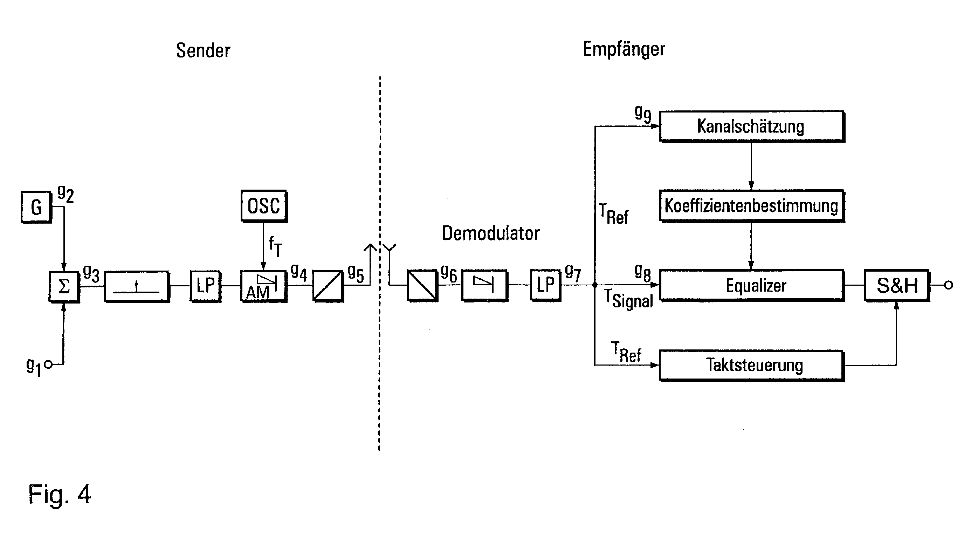

In einer weiteren Variante (Figur 4) wird vor der Koeffizientenbestimmung noch ein zusätzlicher Block "Kanalschätzung" eingefügt, der die Reaktion des Kanals auf die Referenzsymbole einem zusätzlichen mathematischen Algorithmus unterzieht mit dem Ziel, die Impulsantwort des Kanals noch genauer zu bestimmen.

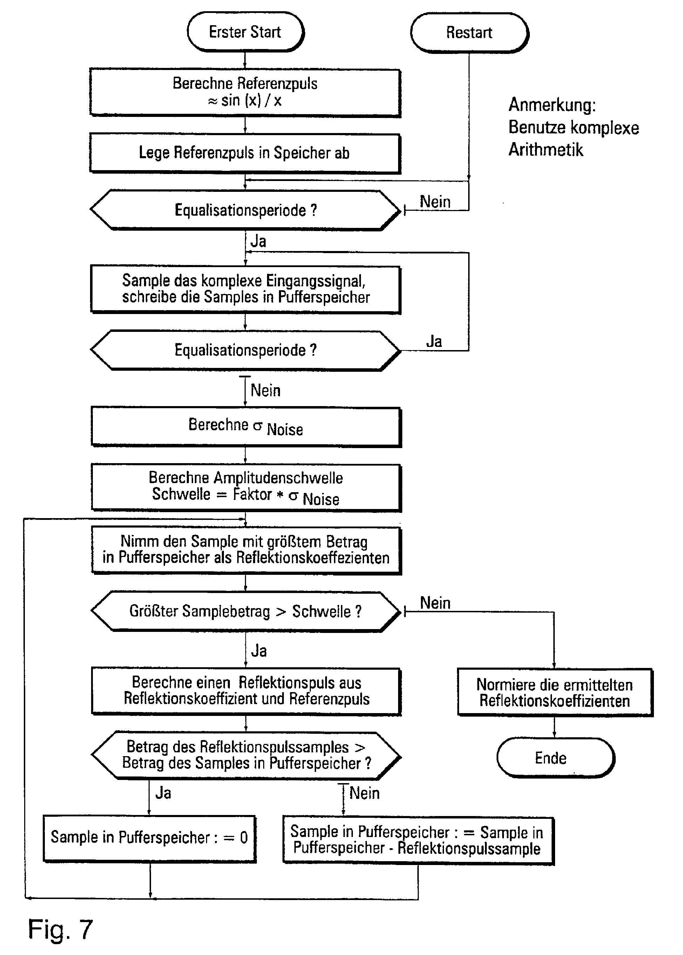

Ein möglicher Algorithmus zur Kanalschätzung ist in Figur 7 in Form eines Flussdiagramms dargestellt. Im Gegensatz zu bekannten Algorithmen handelt es sich hierbei um eine "parametrische" Kanalschätzung. Das heißt, es werden diskrete Mehrwegeechos detektiert und deren jeweilige Parameter Amplitude, Phase und Zeitpunkt, im folgenden "Reflexionskoeffizienten" genannt, geschätzt.

Nach dem ersten Start wird zunächst die bekannte Pulsform eines unverzerrten Symbols berechnet und in einem Speicher abgelegt. Im nächsten Schritt wird der Beginn einer Equalisationsperiode abgewartet. Während der Equalisationsperiode wird das Eingangssignal in einem Pufferspeicher abgelegt. Nach der Equalisationsperiode wird der Pufferspeicherinhalt ausgewertet. Zuerst wird die Standardabweichung des Rauschens ermittelt, indem das Signal vor einem oder mehreren in der Equalisationsperiode enthaltenen Symbolen als Rauschen interpretiert wird. Aus dieser Standardabweichung wird eine Amplitudenschwelle berechnet.

Nun beginnt eine Schleife:

1. Suche den Sample mit maximalem Betrag im Pufferspeicher und interpretiere ihn als Reflexionskoeffizienten.

2. Prüfe ob dieser Wert über der Schwelle liegt

3.a Wenn ja, berechne einen Reflexionspuls, dessen Betrag, Phase und Zeitpunkt durch den Reflexionskoeffizienten bestimmt wird, während seine Form durch den Referenzpuls gegeben ist.

3.b Wenn nein, beende die Schleife, normiere die bis jetzt gefundenen Reflexionskoeffizienten bezüglich des Reflektionskoeffizienten mit maximalem Betrag und liefere diese als Ergebnis zurück.

4. Subtrahiere den berechneten Reflexionspuls sampleweise vom Pufferspeicherinhalt Sofern der Betrag eines Samples des Reflexionspulses größer ist als der Betrag des zeitlich korrespondierenden Samples im Pufferspeicher, schreibe die Differenz der Samples in den Speicher, andernfalls schreibe an dieser Stelle eine Null in den Pufferspeicher.

Beginne wieder bei 1.

Während einer Equalisationsperiode werden ein oder mehrere Referenzsymbole übertragen. Im einfachsten Fall wird das zeitkomprimierte Signal h(t) eines Referenzsymbols als Schätzung der Kanalimpulsantwort interpretiert. Eine auf Grund von vermindertem Rauschen verbesserte Schätzung der Kanalimpulsantwort erhält man, indem man eine Mittelung über mehrere Referenzsymbole durchführt. Eberfalls zur Rauschunterdrückung ist eine Schwellwertfilterung naheliegend. Dabei wird die schwellwertgefilterte Kanalimpulsantwort $h_{Sch}(t)$ überall dort, wo der Betrag von h (t) kleiner als eine zu bestimmende Amplitudenschwelle ist, als Rauschen interpretiert und zu Null gesetzt. Die Schwelle wird beispielsweise als ein festgelegter Bruchteil der maximalen oder mittleren Signalamplitude gewählt. Eine andere Möglichkeit besteht darin, die Schwelle so zu wählen, dass das Signal nach der Schwellwertbildung noch einen festen Anteil (beispielsweise 95%) seiner Energie enthält.

Um mittels Quadraturamplitudenmodulation QAM im ZF- oder HF-Bereich ein Chirp-Signal mit linear ansteigender Frequenz zu erzeugen, ist ein komplexes Basisbandsignal der Form

$$z(t) = \begin{cases} Z_0 * \exp(j * \dfrac{\pi \cdot B \cdot t^2}{T}) & \textit{für}\,|t| \leq \dfrac{T}{2} \\ 0 & \textit{sonst} \end{cases}$$

geeignet. Dabei ist B die Bandbreite des Chirp-Signals, T die Zeitdauer und ^ ist eine zu übertragende Information, die für die Dauer des Chirp-Signals als Konstante betrachtet wird. Durch Abtastung mit der Abtastfrequenz fs ergibt sich eine Chirpfolge aus N Punkten:

$$z(n) = \begin{cases} Z_0 \cdot \exp(j \cdot \pi \cdot \dfrac{B}{f_s \cdot N} \cdot n^2) & \textit{für}\,|n| \leq \dfrac{N}{2} \\ 0 & \textit{sonst} \end{cases}$$

Das Signal z(t) stellt somit ein Chirp-Signal dar, das in der Anordnung nach Figur 1 verwendet werden kann. Weiterhin stellt z(n) eine Chirpfolge dar, die als Korrelationsfolge in der Anordnung nach Figur 2 verwendet werden kann, Die Folge z(n) ist im vorliegenden Fall eine uniforme, polyphasige komplexe Folge, was jedoch keine notwendige Bedingung für ihre Anwendung in der Anordnung nach Figur 2 ist.

In Übertragungssystemen ist es Stand der Technik, die zu übertragenden Symbole zwecks Pulsformung einer Filterung mit einem Raised-Cosine-Rolloff-Filter zu unterziehen. Dadurch wird gewährleistet, dass die Symbole nach der Übertragung die erste Nyquistbedingung erfüllen, wodurch sichergestellt ist, dass keine störenden Intersymbolinterferenzen auftreten. Es ist weiterhin üblich, das Raised-Cosine-Rolloff-Filter auf Sender und Empfänger aufzuteilen, indem beispielsweise jeweils ein Filter mit einer Wurzel-Raised-Cosine-Rolloff-Charakteristik verwendet wird. Entscheidend ist dabei, dass die resultierende Übertragungsfunktion aller Elemente des Übertragungsweges der aus der gewünschten Symbolrate resultierenden Raised-Cosine-Rolloff-Charakteristik entspricht.

Ein großer Vorteil von linearen Chirp-Signalen liegt nun darin, dass auf einfache Weise ein beliebiger Frequenzgang, also auch eine Wurzel-Raised-Cosine-Rolloff-Charakteristik, aufgeprägt werden kann, indem das Signal im Zeitbereich mit dem gewünschten Frequenzgang multipliziert, also gewichtet wird. Dies ist möglich, weil bei dem linearen Chirp jeder Zeitpunkt auch genau einem Frequenzpunkt entspricht. Der genaue Zusammenhang f(t) zwischen Zeitpunkt und Frequenzpunkt ergäbt sich aus der Ableitung der Phase des Chirp-Signals.

Eine Folge der Form

$$z(n) = \begin{cases} Z_0 \cdot \exp(j \cdot \pi \cdot \dfrac{B}{f_S \cdot N} \cdot n^2) \cdot W(f(n)) & \textit{für}\,|n| \leq \dfrac{N}{2} \\ 0 & \textit{sonst} \end{cases}$$

stellt also eine gewichtete Chirpfolge dar. Die Wichtungsfunktion W(f) ist die gewünschte Frequenzcharakteristik, also beispielsweise die bekannte Wurzel-Raised-Cosine-Rolloff-Charakteristik.

Die Funktion f(n) beschreibt hier den Zusammenhang zwischen momentanem Zeitpunkt und Momentanfrequenz. Für die hier verwendete Chirpfolge gilt:

$$f(n) = 2 \cdot \pi \cdot \frac{B}{f_S} \cdot \frac{n}{N}$$

Bei der Verwendung von Korrelationssignalen und insbesondere Chirp-Signalen ist es also möglich, die ohnehin notwendige Pulsformungsfilterung bereits vor der Übertragung durchzuführen, indem das Korrelationssignal entsprechend vorgefiltert bzw. das Chirp-Signal entsprechend gewichtet wird. Der Nachteil des erhöhten Rechenaufwandes für die Verarbeitung von Korrelationssignalen wird damit mehr als ausgeglichen.

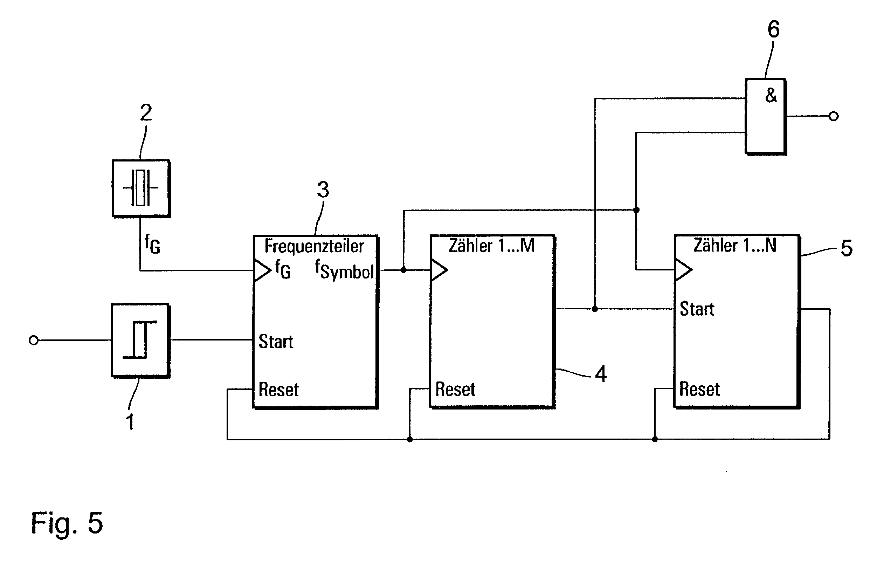

Da die Referenzsymbole vorzugsweise überlappungsfrei gesendet werden, haben sie nach der zeitlichen Kompression eine hohe Amplitude. Sie können daher mit einfachen Mitteln zeitlich präzise detektiert werden. Dies eröffnet die Möglichkeit, die Taktsteuerung des Empfängers direkt aus den Referenzsymbolen abzuleiten. Figur 5 zeigt eine Anordnung, die dieses ermöglicht Dabei wird von dem einfachen Fall ausgegangen, dass auf jeweils ein Referenzsymbol nach einem Zeitintervall von M Symboltakten ein Paket aus N Informationssymbolen folgt.

Zunächst wird das Referenzsymbol mittels eines Komparators 1 detektiert. Das Auftreten eines Referenzsymbols löst die Freigabe eines Frequenzteilers 3 aus. Am Eingang des Frequenzteilers liegt das Signal eines Oszillators 2, dessen Frequenz ein Vielfaches des Symboltaktes beträgt. Am Ausgang des Frequenzteilers steht nun der Symboltakt. Die Phase des Symboltaktes wird durch den Freigabezeitpunkt bestimmt. Der Phasenfehler des Symboltaktes ist erwartungsgemäß klein , da er nur von der Zeitgenauigkeit des Freigabezeitpunktes abhängt

Ein Zähler 1 ... M 4 zählt die bekannte Anzahl M von Symboltakten, die zwischen dem Referenzsymbol und dem ersten Informationssymbol liegt. Ein Zähler 1 ... N 5 zählt die bekannte Anzahl von Symboltakten N, die zwischen dem ersten Informationssymbol! und dem letzten Informationssymbol liegt. Zähler 1 ... M und Zähler 1 ... N sind "Einmal"-Zähler, die sobald sie ihren Endwert erreicht haben in ihrem momentanen Zustand verharren, bis sie durch ein RESET-Signal zurückgesetzt werden.

in dem Zeitintervall, in dem Zähler 1 ... N aktiv ist, liegt am Ausgang des Ausgangstors 6 ein Signal, mit dessen Flanken alle Informationssymbole präzise gesampelt werden können. Sobald Zähler 1 ... N seinen Endwert erreicht hat, wird die Anordnung in den Ursprungszustand zurückgesetzt und wartet auf die Aktivierung durch das nächste Referenzsymbol.

Die vorliegende Erfindung kombiniert zur Übertragung von Nachrichtensignalen ein Frequenz- mit einem Zeitspreizverfahren. Um eine bestmögliche spektrale Ausnutzung des Übertragungskanals zu erreichen, werden die zu übertragenden Symbole frequenzgespreizt. Zum Unterschied von anderen Frequenzspreizverfahren erfolgt die Frequenzspreizung hier nicht durch symbolweise Multiplikation mit einer Code-Folge, sondern durch Hochtastung bzw. Quasidirac-Impulsformung mit anschließender Filterung.

Im Ergebnis der Frequenzspreizung hat jeder einzelne der zu übertragenden Impulse eine annähernd rechteckige spektrale Leistungsdichte über dem gesamten Frequenzbereich der Übertragung. Durch diese Breitbandigkeit sind die frequenzgespreizten Signale robust gegen schmalbandige Störungen.

Ein wichtiges Merkmal der Erfindung besteht ferner darin, dass die frequenzgespreizten Symbole der gesamten Sendeperiode (also Referenz- und Informationssymbole) vor der Übertragung zusätzlich zeitgespreizt werden. Durch diese Zeitspreizung wird die Impulsenergie der einzelnen Symbole über einen längeren Zeitraum verteilt. Die Übertragung wird dadurch robuster gegen kurzzeitige Störungen. Die derart zeitgespreizten Symbole werden im Empfänger wieder zeitlich komprimiert.

Durch diese Kompression ergibt sich ein Systemgewinn im Signal-zu-Rausch-Verhältnis, der direkt vom Maß der zeitlichen Spreizung abhängig ist. Wegen des rechteckförmigen Leistungsdichtespektrums eignen sich die frequenzgespreizten Symbole besonders gut als Testsignale zur Bestimmung der Kanaleigenschaften.

In einem speziellen Messintervall zur Kanalschätzung werden deshalb frequenzgespreizte Symbole ausgesendet, um den Kanal im gesamten Frequenzbereich mit gleicher Intensität anzuregen. Die Impulsantwort des Kanals wird im Empfänger aufgezeichnet und als Eingangsgröße zur Echokompensation verwendet.

Bei Übertragung mit hohen Symboldatenraten über störungsbehaftete Nachrichtenkanäle setzt die Kompensation der Mehrwege-Verzerrungen eine sehr genaue Bestimmung der Kanalparameter voraus. Bedingung dafür ist eine besonders gegen Störungen gesicherte Übertragung der Referenzsymbole. Das bedeutet, dass sie gegenüber den Informationssymbolen mit erhöhter Leistung ausgesendet werden müssten. In leistungsbegrenzten Systemen aber wird innerhalb einer Sendeperiode stets mit der gleichen maximalen Leistung gesendet. Durch die symbolweise Spreizung können sich die übertragenen Informationssymbole abhängig von der Symbolrate und der Länge der Spreizfolge mehr oder weniger stark überlappen, so dass sich die abgegebene Sendeleistung stets auf mehrere Symbole aufteilt. Die im Messintervall übertragenen Referenzsymbole zur Kanalschätzung dagegen werden erfindungsgemäß so positioniert, dass sie von Überlappungen frei sind, sie werden demnach mit der vollen Sendeleistung übertragen. Sie sind also leistungsmäßig gegenüber den einzelnen Informationssymbolen überhöht und erscheinen im Empfänger mit einem erhöhten S/N.

Sowohl die Referenzsymbole zur Kanalschätzung als auch die Informationssymbole durchlaufen im Sender eine gemeinsame Vorrichtung, in der zunächst die Frequenzspreizung und anschließend eine Zeitspreizung vorgenommen wird. Entsprechend ist auch der Empfänger ausgelegt, der zuerst die zeitliche Kompression und anschließend die Entspreizung im Frequenzbereich vornimmt.

Die Übermittlung der Referenzsymbole ist also in sehr einfacher Weise in die Datenübertragung integriert. Benötigt werden zur Bestimmung der Kanalparameter keine zusätzlichen speziellen Sende- oder Empfangsmodule, aufwendige Filtervorrichtungen oder zusätzliche Korrelatoren.

Die verwendeten Spreizverfahren entfalten ihre Vorteile (hohe Störsicherheit gegen schmal- und breitbandige Störungen) bereits bei der reinen Informationsübertragung. Durch die zusätzliche Verwendung zur Bestimmung der Kanalparameter werden diese Vorteile in besonderer Weise gebündelt.

Vorstehend wurde beschrieben - beispielsweise anhand der Figur 3 - ein Chirp-Signal als Korrelationssignal zu verwenden. Ein Chirp-Signal als solches ist bekannt und es sei hier lediglich noch einmal auf die wesentlichen Eigenschaften eines Chirp-Impulses bzw. eines Chirp-Signals hingewiesen. Chirp-Impulse sind linear frequenzmodulierte Impulse konstanter Amplitude der Dauer T, innerhalb derer sich die Frequenz zwischen einer unteren und einer oberen Frequenz stetig linear steigend oder fallend ändert. Die Differenz zwischen oberer und unterer Frequenz stellt die Bandbreite des Chirp-Impulses dar. Die Gesamtdauer T des Impulses, multipliziert mit der Bandbreite B des Impulses wird als Dehnungs-oder Spreizfaktor bezeichnet. Figur 8 zeigt die Hüllkurve eines komprimierten Impulses, der entsteht, wenn ein Chirp-Impuls ein dispersives Filter, dessen Phasengang parabelförmig und dessen Gruppenlaufzeitverhalten linear ist, passiert.

Vorstehend wurde die Signalaufbereitung durch Frequenz- und Zeitspreizung beschrieben. Diese Kombination der Frequenz- und Zeitspreizung bietet besondere Vorteile in der Unterdrückung von Störungen auf dem Übertragungsweg. Hervorzuheben ist, dass sowohl die Frequenz- als auch die Zeitspreizung gut in Hochgeschwindigkeitsverfahren zur Datenübertragung mit Grenzdatenraten integrierbar sind. Wird mit höchsten Datenraten übertragen, dann wird zur Unterdrückung von Multipath-Effekten eine leistungsfähige Equalisation benötigt. Die Voraussetzung dafür ist die beschriebene Kanalschätzung.

Nachfolgend wird nun beschrieben, wie die Methoden der Frequenzspreizung und Zeitspreizung auf eine neue Weise in ein Mehrfachzugriffssystem eingebracht werden können, bei dem das vordringliche Ziel verfolgt wird, nämlich die höchste Flexibilität der Teilnehmer-Zugriffe bei jeweils maximal möglicher Störsicherheit zu gewährleisten.

Die für die Übertragung verfügbaren Kanalressourcen sind die Kanalbandbreite B und die maximal erreichbare (oder erlaubte) Sendeleistung P. Besonders dann, wenn ein Point-zu-Multipoint-System etabliert werden soll, kommt es darauf an, die Kanalressourcen effektiv zu verwalten. Dabei geht es nicht um eine einmalige Optimierung und Justage, wie etwa beim Aufbau einer Richtfunkstrecke, sondern um eine dynamische Anpassung an Bandbreitenanforderungen der einzelnen Teilnehmer unter ebenfalls veränderlichen Umweltbedingungen.

Das erfindungsgemäße Zugriffssystem ist in der Lage, unter den folgenden Betriebsbedingungen zu arbeiten:

- unterschiedliche Datenraten von Teilnehmer zu Teilnehmer, asymmetrische Datenraten

- veränderliche Umgebungseinflüsse (Rauschen, Störsignale)

- unterschiedliche und veränderliche Multipath-Bedingungen für verschiedene Teilnehmer

- unterschiedliche, gegebenenfalls variable Entfernungen der Teilnehmer zur Basisstation

- variable Verkehrsdichte

- Auch die BER-Anforderungen (BER = Bitfehlerrate) sind für die verschiedenen Teilnehmer unterschiedlich, abhängig von der Natur der zu übertragenden Daten (Sprache, Musik, Video, Online Banking etc.). Das System sollte also auch gewährleisten, dass die von jedem Teilnehmer je nach Art der zu übertragenden Daten geforderten Bitfehlerraten in jedem Fall eingehalten werden.

Ein Übertragungssystem, das auf derart viele veränderliche Größen reagieren und gleichzeitig akzeptable individuelle Bitfehlerraten garantieren soll, verlangt erfindungsgemäß eine höchstmögliche Flexibilität und gleichzeitig die Aktivierung aller Frequenz- und Leistungsreserven des Kanals - kurz: die vollständige Ausnutzung der Kanalressourcen zu jedem Zeitpunkt.

Erfindungsgemäß wird hierzu ein (Zugriffs-)System vorgeschlagen, das den verschiedenen Teilnehmer-Stationen eine Datenverbindung zur Verfügung stellt, deren Kenngrößen (BER, Datenrate, Sendeleistung) auf die individuellen Anforderungen des Teilnehmers abstimmbar sind. Zusätzlich sollte gewährleistet sein, dass das Übertragungssystem diese Kenngrößen selbsttätig an veränderte Übertragungs- und Verkehrsbedingungen anpassen kann.

Das erfindungsgemäße Zugriffssystem kombiniert zur Übertragung von Nachrichten eine variable Frequenzspreizung, eine variable Zeitspreizung, eine variable teilnehmerabhängige Sendeleistung und ein variables TDMA-Multiplex-Raster miteinander.

Die Einstellung dieser Parameter dient unmittelbar der flexiblen und adaptiven Reaktion auf variable Teilnehmeranforderungen, die Übertragungsdatenrate und die BER betreffend. Berücksichtigt wird im Ressourcen-Management, dass die unterschiedlichen Teilnehmer verschiedene Entfernungen zur Basisstation haben und dass für die einzelnen Übertragungspfade unterschiedliche Umweltbedingungen (Störungen, Multipath-Effekte, Rauschen) gelten. Das erfindungsgemäße Zugriffssystem bietet die Möglichkeit zur Unterdrückung von Rausch- und anderen Störsignalen.

Die Größen Frequenzspreizung, Zeitspreizung, Sendeleistung (pro Informationssymbol) und TDMA-Rasterung können dabei dynamisch an das Verkehrsaufkommen, an sich ändernde Übertragungsbedingungen angepasst werden. Sie sind zu einem gewissen Grade unabhängig voneinander einstellbar, das heißt, dimensionierbar.

Die Methoden zur Zeit- und Frequenzspreizung können in Kombination mit den verschiedensten Mehrfachzugriffsverfahren eingesetzt werden, beispielsweise in TDMA-, in FDMA-Systemen oder in einer Kombination von TDMA mit FDMA.

Das TDMA-Zugriffsverfahren gestattet den Betrieb mit variabler Symbolrate für den Einzelteilnehmer, es erlaubt die Kommunikation mit asymmetrischen Datenraten. Über die Variationen von Time-Slot-Längen (Zeitschlitzlängen) kann ein TDMA-System in bekannter Weise auf wechselnde Teilnehmerdichten (bzw. Bandbreitenanforderungen) reagieren. In engem Zusammenhang mit diesen Eigenschaften zu sehen ist die Möglichkeit, die Übertragungsqualität teilnehmerbezogen so einzustellen, dass eine bestimmte geforderte Bitfehlerrate (BER) nicht überschritten wird (BER on demand).

Eine Darstellung des Zusammenwirkens von Frequenzspreizung, Zeitspreizung, Variation der Datenrate, der TDMA-Zeitschlitzlänge und der Sendeleistung wird nachfolgend beschrieben.

Das erfindungsgemäße Verfahren ist ein Mehrfachzugriffsverfahren mit teilnehmerbezogen variablen Datenraten und Sendeleistungen, unter Einsatz eines adaptiven Verfahrens zur frequenz- und zeitgespreizten Übertragung der Informationssymbole mit den folgenden Merkmalen:

- TDMA-Rahmen mit variablem Multiplex-Raster
  In der Grundstruktur ist das erfindungsgemäße Zugriffsverfahren wie ein TDMA-Verfahren ausgeführt. Die Teilnehmer-Trennung erfolgt auf der Zeitachse. In den bekannten TDMA-Systemen (beispielsweise DECT) ist es üblich, ein festes Multiplexraster vorzusehen, und auf erhöhte Datenraten-Anforderungen mit dem Zusammenlegen mehrerer Time-Slots zu reagieren, die dann einem Teilnehmer zugewiesen werden.
  Der im erfindungsgemäßen Zugriffsverfahren verwendete TDMA-Rahmen besitzt keine feste Slot-Anzahl bzw. festgelegte Slot-Breiten. Das Multiplex-Raster verändert sich mit der Anzahl und den Datenraten-Anforderungen der angemeldeten Teilnehmer.

- Variable Frequenzspreizung
  Um eine höchstmögliche Störsicherheit der Übertragung zu erreichen, werden die in den Zeitschlitzen übertragenen Informationssymbole auf die Kanalbandbreite frequenzgespreizt.
  Die Frequenzspreizung läuft in zwei Schritten ab:

- Quasidirac-Impulsformung für jedes einzelne Symbol, unabhängig von der Symbolrate (diese Operation wird im Basisband durchgeführt und kann als die eigentliche Frequenzspreizung angesehen werden).

- Bandpassfilterung der Quasidirac-Folge
  Mit der Bandpassfilterung wird die Frequenzspreizung abgeschlossen. Erreicht wird die Begrenzung des Signalspektrums auf die Bandbreite B des Übertragungskanals. Ein Einzelsymbol besitzt dann ein rechteckförmiges Leistungsdichtespektrum im gesamten verfügbaren Frequenzbereich, im Zeitbereich stellt sich der Symbolfluss als Abfolge sin(x)/x-förmiger Impulse dar. Die mittlere Breite $\delta$ eines derartigen Impulses ist durch die Kanalbandbreite B festgelegt und bestimmt sich zu $\delta = 1 / B$.

Bestehen vor der Spreizung Frequenzreserven, das heißt, ist der Quotient aus Kanal-bandbreite und Teilnehmer-Symbolrate größer als Eins, dann resultiert aus der frequenzgespreizten Übertragung ein Systemgewinn im Signal-zu-Rauschverhältnis. Dieser Systemgewinn wird im Empfänger durch Frequenzkompression realisiert, Damit verbunden ist eine Verringerung der Bitfehlerrate. Der Systemgewinn lässt sich durch Variation der betreffenden Symbolrate steuern. Eine Verringerung der Symbolrate bei konstanter Kanalbandbreite führt automatisch zu einer stärkeren Frequenzspreizung, das heißt zu einem höheren Systemgewinn und also zu einer größeren Resistenz gegen Rausch- und Schmalbandstörungen.

Letztlich erlaubt die variable Frequenzspreizung das Einsteilen einer bestimmten vom Teilnehmer geforderten Bitfehlerrate auch unter sich ändernden Übertragungsbedingungen.

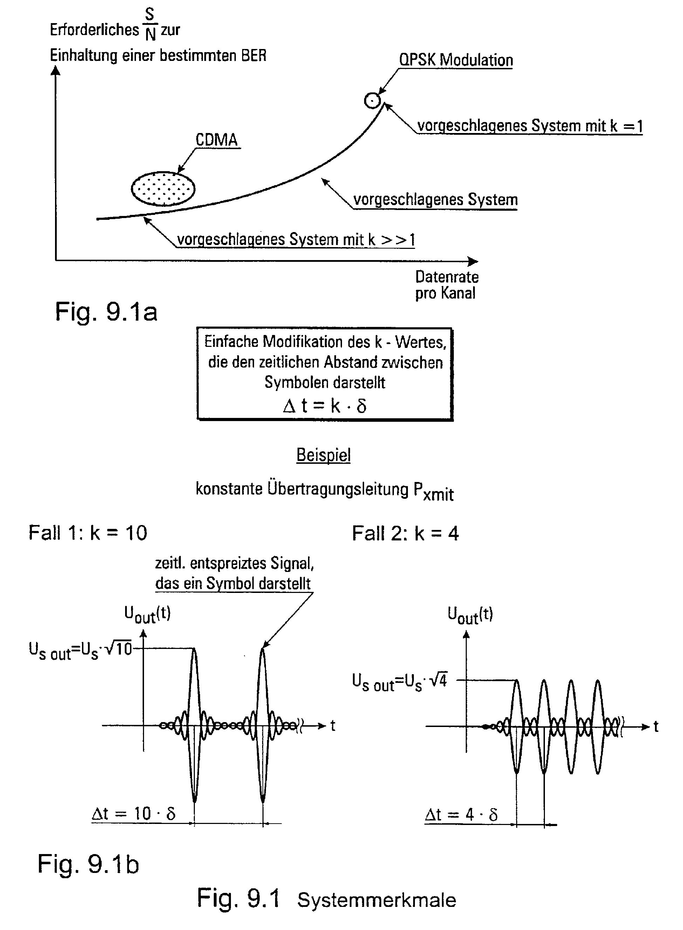

Figur 9.1a zeigt ein Diagramm, in dem das zur Einhaltung einer bestimmten BER notwendige S/N über der Datenrate aufgetragen ist. Im Bild dargestellt ist der Betriebsbereich gängiger CDMA-Systeme, die mit einem Spread Spectrum Verfahren mit fest eingestellter Frequenzspreizung arbeiten und im Vergleich dazu die Arbeitsbereiche eines QPSK-Systems und eines erfindungsgemäßen Übertragungssystems mit variabler Frequenzspreizung. Der Faktor k bezeichnet den Abstand benachbarter Symbole in Einheiten von $\delta$, wobei $\delta$ die mittlere Breite eines auf die Bandbreite B frequenzgespreizten Symbols darstellt ($\delta$ = 1/B). Dieser Wert k kann ais das Maß der Frequenzspreizung angesehen werden und ist identisch mit dem erreichbaren Systemgewinn G. Während das CDMA-Verfahren bei einem geringen erforderlichen S/N auf die Übertragung mit einer festen Datenrate angewiesen ist, erlaubt die variable Frequenzspreizung das Durchfahren des gesamten Bereichs [S/N; Datenrate] entlang der dargestellten Linie. Verringert sich die erforderliche BER, beispielsweise dann, wenn weniger sensible Daten übertragen werden sollen, dann kann die Übertragungsgeschwindigkeit erhöht werden. Für alle Punkte auf der Linie wird in jedem Fall die vollständige Ausnutzung der Ressource "Bandbreite" gewährleistet (Spektrale Effizienz). Frequenzreserven beliebiger Größe werden automatisch in einen Systemgewinn umgesetzt, der bei der Datenübertragung wirksam wird.

Figur 9.1b enthält ein Beispiel zur frequenz- (und zeit-)gespreizten Übertragung. Die frequenzgespreizten' Sendesymbole wurden mit gleicher Sendeleistung, aber mit verschiedenen Symbolraten (unterschiedliche Faktoren k) übertragen. Dargestellt sind die am Ausgang des empfangsseitigen Kompressionsfilters erscheinenden Signale. Die Spitzenamplituden $U_{S\ out}$ des komprimierten Signals sind gegenüber der Amplitude $U_S$ des empfangenen Spreizsignals um den Faktor $\sqrt{k}$ überhöht. Die Leistungsüberhöhung hat entsprechend den Wert k. Über die Symbolrate ist der Systemgewinn G = k variierbar.

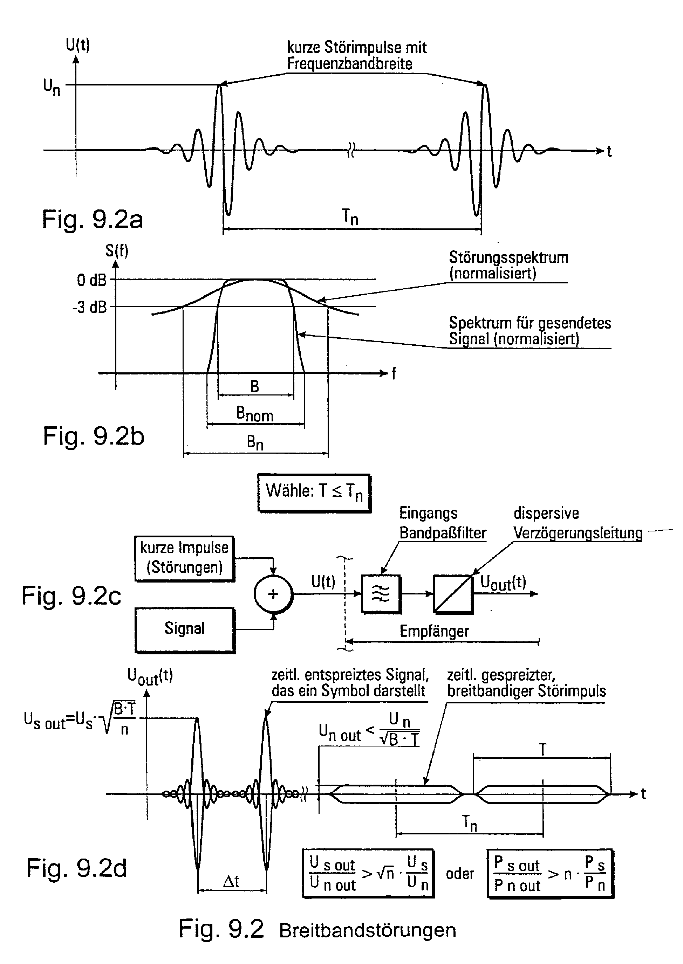

Die frequenzgespreizten Symbole werden vor der Übertragung zum Empfänger zeitgespreizt. Die symbolweise erzeugten sin(x)/x-Impulse der Breite $\delta$ werden vor der Übertragung in Chirp-Impulse der Länge T umgewandelt. Damit bestimmt die Chirp-Dauer die maximal erreichbare Zeitspreizung [= T / $\delta$]. Ein besonderer Vorteil der zeitgespreizten Übertragung besteht in der Unterdrückung breitbandiger Störungen. Deshalb wird die Chirp-Dauer T abgestimmt auf die im Kanal periodisch auftretenden breitbandigen Störungen. Diese Abstimmung wird in Figur 9.2 demonstriert:

in Figur 9.2a dargestellt sind mögliche breitbandige Übertragungsstörungen, die mit der Periode $T_n$ auftreten. Die Bandbreite $B_n$ der Störimpulse sei größer als die effektive Kanalbandbreite B.

Figur 9.2b zeigt die Spektren des Sendesignals und der überlagerten breitbandigen Störungen. $B_n$ ist die wirksame Bandbreite des Störsignals, begrenzt durch das Eingangsfilter im Empfänger. $B_{nom}$ ist die gesamte verfügbare (lizenzierte) Kanalbandbreite, und B ist durch die Roll-Off-Filterung in Sender und Empfänger begrenzte Kanalbandbreite, die zur besseren Unterscheidung im folgenden als effektive Bandbreite bezeichnet wird.

Figur 9.2c zeigt, wie sich dem Sendesignal die Störimpulse additiv überlagern. Das Signalgemisch aus Daten- und Störimpulsen passiert im Empfänger zunächst ein Eingangsfilter und anschließend eine dispersive Delay Line (ChirpFilter).

Figur 9.2d zeigt das Ausgangssignal $U_{out}(t)$ der Delay Line. Zum besseren Verständnis sind die komprimierten Datenimpulse und die gedehnten Störanteile getrennt dargestellt. Mit $U_s$ wird die Amplitude der Datenimpulse vor der Kompression bezeichnet. $U_n$ ist die Amplitude der überlagerten breitbandigen Störimpulse, Am Ausgang des Kompressionsfilters hat sich die Amplitude der Datenimpulse auf das $\sqrt{(BT)/n}$ -fache erhöht, während die Amplitude der Störimpulse auf das $1/\sqrt{(BT)}$ -fache gesunken ist. Gegenüber dem unkomprimierten Empfangssignal hat sich der Signal-Störabstand um den Faktor $\sqrt{n}$ bei Betrachtung der Amplituden, bzw. um den Faktor n bei Betrachtung der Leistung erhöht. Rechts im Bild sind die beiden gedehnten Störimpulse dargestellt. Durch die erfahrene Spreizung sind sie auf die Dauer T verlängert worden. Prinzipiell kann man breitbandige Störungen durch die Wahl einer entsprechend hohen Chirp-Dauer T auf eine beliebige Länge spreizen. Eine Randbedingung bleibt aber die technische Realisierbarkeit der Chirpfilter. Wenn die beschriebenen Kurzzeitstörer periodisch auftreten, dann ist bei der Dimensionierung des Systems darauf zu achten, dass sich die gespreizten Störimpulse nicht überlappen, um eine unerwünschte Überhöhung im gedehnten Störsignal $U_{n\ out}$ zu vermeiden. Um diesen Fall auszuschließen, muss die einzustellende Chirp-Dauer T kleiner gewählt werden als die Periode $T_n$ der Störimpulse.

Durch die Zeitspreizung erlangt das zu übertragende Signal eine Resistenz gegenüber breitbandigen Störungen. In Abhängigkeit vom Auftreten periodischer breitbandiger Störimpulse wird das Maß der Zeitspreizung beim Herstellen einer Verbindung zwischen Basisstation und Teilnehmerstation vereinbart (eingestellt). Deshalb wird von einer variablen Zeitspreizung gesprochen.

Den einzelnen Teilnehmern bzw. den verschiedenen Zeitslots kann eine unterschiedliche Sendeleistung zugewiesen werden.

Die Einstellung dieser Parameter dient unmittelbar der flexiblen und adaptiven Reaktion auf variable Teilnehmeranforderungen, die Übertragungsdatenrate und die BER betreffend. Berücksichtigt wird im Ressourcen-Management, dass die unterschiedlichen Teilnehmer verschiedene Entfernungen zur Basisstation haben und dass für die einzelnen Übertragungspfade unterschiedliche Umgebungsbedingungen (Störungen, Multipath-Effekte, Rauschen) gelten. Der Einsatz von Frequenzspreizung und Zeitspreizung bei der Nachrichtenübertragung bietet die Möglichkeit zur Unterdrückung von Rausch- und anderen Störsignalen.

Die Größen TDMA-Rasterung, Frequenzspreizung, Zeitspreizung und Sendeleistung können dynamisch an das Verkehrsaufkommen, an sich ändernde Übertragungsbedingungen und Teilnehmeranforderungen angepasst werden. Sie sind zu einem gewissen Grade unabhängig voneinander einstellbar. Verändert werden aber in der Regel nicht einzelne dieser Größen, sondern ihr Zusammenspiel und Ineinandergreifen, wie das folgende Ausführungsbeispiel zeigt:

Im Ausführungsbeispiel wird das Prinzip dargestellt, nach dem Frequenzspreizung, Zeitspreizung und Sendeleistung aufeinander abgestimmt werden. Es wird gezeigt, in welcher Weise sich diese Parameter an Teilnehmeranforderungen, Übertragungsbedingungen und an die Verkehrsdichte anpassen (adaptieren) lassen.

Im dazu verwendeten Programmschema werden zunächst die Kanaleigenschaften analysiert, dann die Forderungen der Teilnehmer (Subscriber) an die Übertragung abgefragt und anschließend unter Berücksichtigung dieser Daten das Maß der Zeitspreizung, der Frequenzspreizung und die notwendige Sendeleistung bestimmt. Mit diesen Daten wird dann die Verbindung zum Teilnehmer hergestellt.

Eine herzustellende Verbindung ist im wesentlichen durch drei Eigenschaften charakterisiert:

- die gewünschte Übertragungsgeschwindigkeit (Übertragungsdatenrate)

- die geforderte Bitfehlerrate

- die gewünschte (ggf. auch die maximal erlaubte) Sendeleistung.

Diese drei Werte werden von einer Teilnehmerstation dann mitgeteilt, wenn sie eine Datenverbindung zur Basisstation herstellen will. Abhängig vom Charakter der übertragenen Daten können die drei Forderungen mit unterschiedlichen Prioritäten versehen werden. So kann die Bitfehlerrate, die zur Übertragung von Sprache verlangt wird, geringer sein, als die zur Übertragung sensibler Bankdaten notwendige BER. Zur Sprachübertragung würden die Prioritäten beispielsweise in der Reihenfolge [Sendeleistung, Übertragungsgeschwindigkeit, BER] gesetzt, zur Übertragung von Bankdaten beispielsweise in der Reihenfolge [BER, Sendeleistung, Übertragungsgeschwindigkeit].

Die Übertragung extrem langer Dateien (beispielsweise Grafikdateien) erfordert eine höhere Übertragungsgeschwindigkeit als etwa die Übermittlung von kurzen Datenbankabfragen. !n anderen Bereichen, etwa bei medizintechnischen Anwendungen, kann die erlaubte Sendeleistung auf ein sehr geringes Maß begrenzt sein, während an die Übertragungsgeschwindigkeit keine erhöhten Anforderungen gestellt werden.

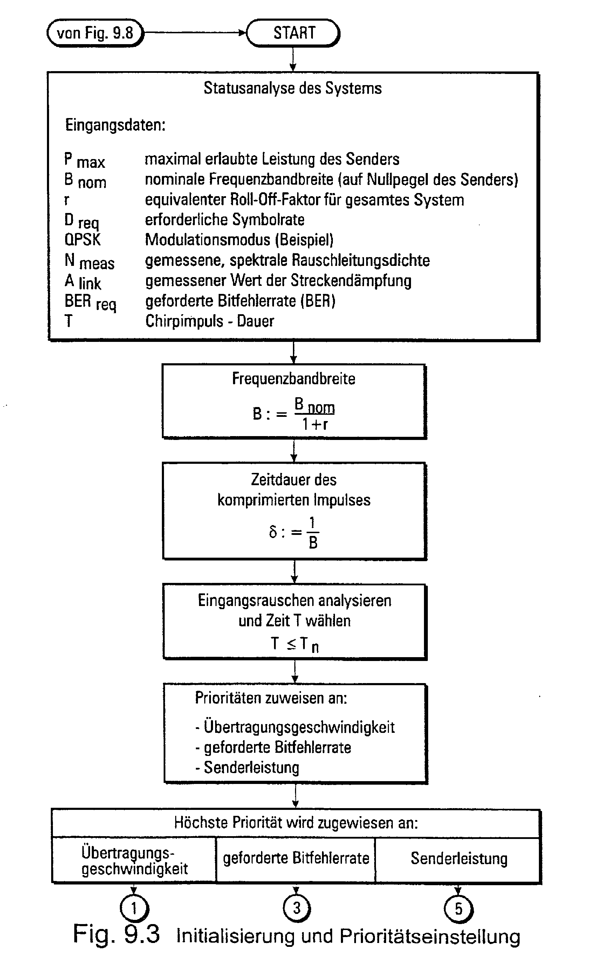

In den Abbildungen Figur 9.3 bis Figur 9.8 wird ein Programmablauf demonstriert, der die Teilnehmeranforderungen (einschließlich der gesetzten Prioritäten) aufnimmt und, abgestimmt auf die Kanaleigenschaften, unter Verwendung von Frequenz- bzw. Zeitspreizung und Leistungssteuerung eine Verbindung mit der höchstmöglichen Störsicherheit herstellt.

Zum Startzeitpunkt liegt der Verbindungswunsch eines Teilnehmers vor. Die Basisstation hat für diese Verbindung bereits einen Zeitschlitz bestimmter Länge im TDMA-Rahmen reserviert. (Dieser Zeitschlitz kann im weiteren Verlauf der Verbindung vergrößert oder verkleinert werden, was eine Abstimmung mit den übrigen Teilnehmern voraussetzt und einigen protokollarischen Aufwand erfordert. Eine Verlängerung des zugewiesenen Zeitschlitzes ist z.B. dann erforderlich, wenn der Teilnehmer innerhalb einer laufenden Verbindung die Erhöhung der Datenrate fordert, ohne dass eine Verminderung der BER oder eine Erhöhung der Sendeleistung möglich ist.) Für das folgende Programmschema wird ein Zeitschlitz konstanter Länge vorausgesetzt.

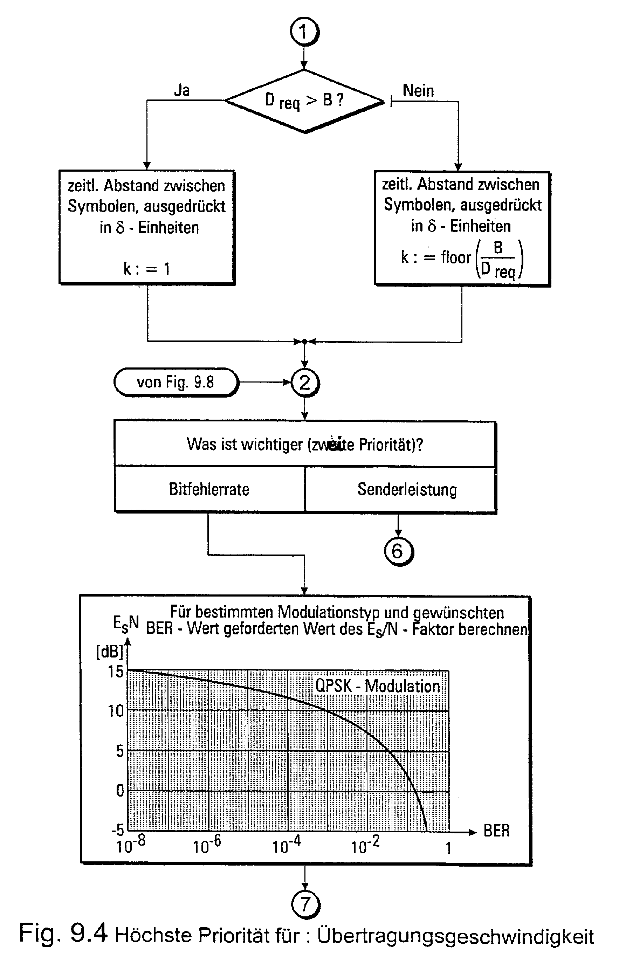

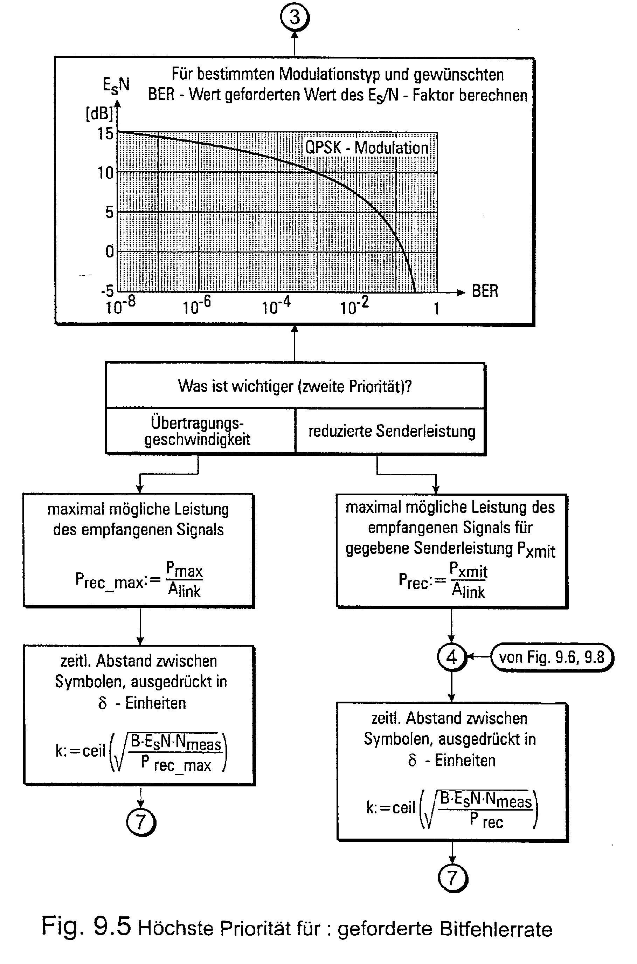

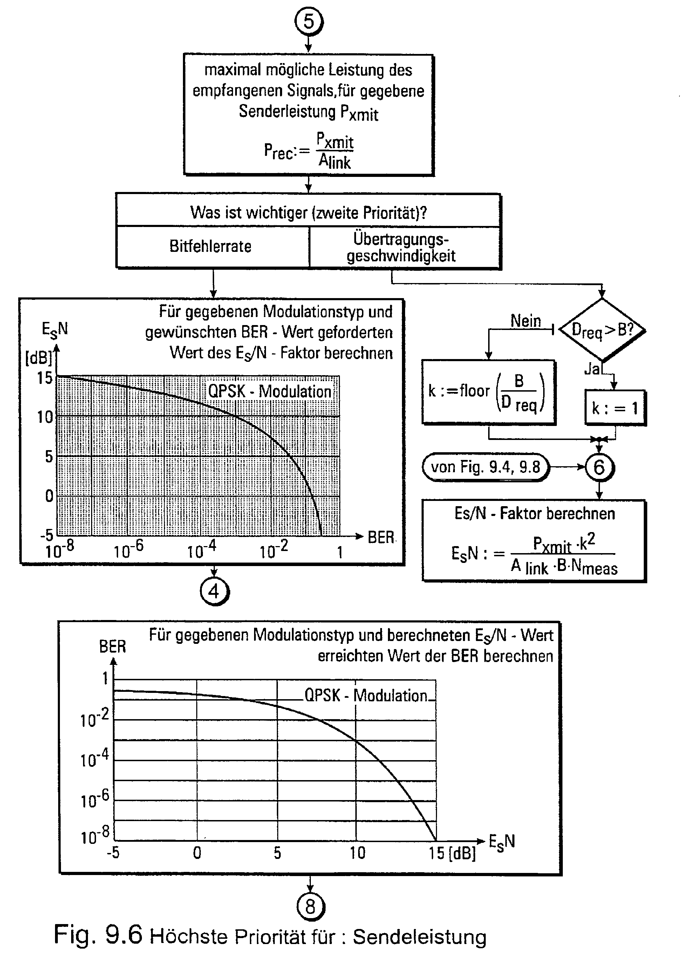

Der Programmablaufplan ist in fünf Teile gegliedert, die jeweils in einer eigenen Abbildung dargestellt sind. Der erste Teil (siehe Figur 9.3) beschreibt die Eingangsdaten zum Anmeldezeitpunkt und die möglichen Prioritäten, die ein Teilnehmer setzen kann. Abhängig von der dazu getroffenen Auswahl (Übertragungsgeschwindigkeit, geforderte BER, Sendeleistung) wird anschließend auf die Programmteile in Figur 9.4, Figur 9.5 oder Figur 9.6 verzweigt. In diesen Programmteilen wird aus der bevorzugten Größe (Priorität 1) und der jeweils mit "Priorität 2" versehenen Größe die dritte Größe (Priorität 3) bestimmt. Beispielsweise wird für die Übertragung mit einer gewünschten Symbolrate und einer geforderten BER die bei Beachtung der Randbedingungen (Streckendämpfung, Rauschleistungsdichte) notwendige Sendeleistung berechnet.

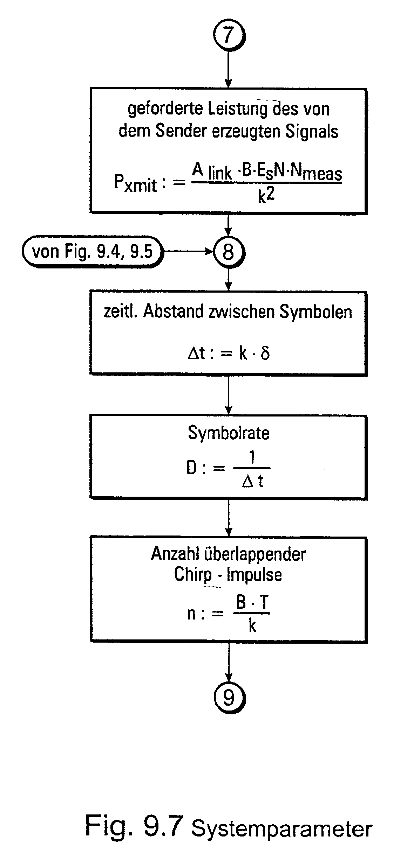

in Figur 9.7 ist eine Rechen-Prozedur dargestellt, die von den drei vorangegangenen Programmteilen aufgerufen wird. Mit dieser Prozedur werden die jeweils für den Teilnehmer erreichbare Symbolrate und die mögliche Zeitspreizung berechnet.

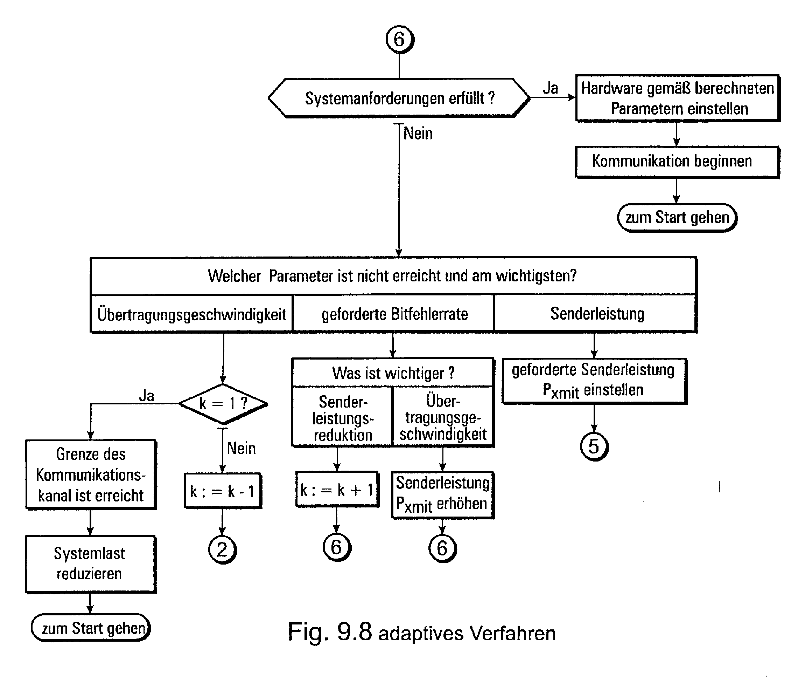

Die gewonnenen Ergebnisse werden der "Adaptiven Prozedur" in Figur 9.8 übergeben. Diese Prozedur überprüft, ob die berechneten, d.h. für die Übertragung vorgesehen Werte: Symbolrate, BER und Sendeleistung den Teilnehmeranforderungen genügen bzw. vom Übertragungssystem realisierbar sind. Wenn ja, dann wird eine Verbindung zum Teilnehmer mit genau diesen Werten aufgebaut. Andernfalls werden, wiederum über eingestellte Prioritäten gesteuert, Programmschleifen durchlaufen, mit denen Symbolrate und Sendeleistung so lange verändert werden, bis eine Datenübertragung mit diesen Parametern durchführbar ist. Die Adaptive Prozedur ist ebenfalls in der Lage, auf Änderungen der Streckendämpfung und der spektralen Rauschleistungsdichte zu reagieren, so dass auch eine dynamische Anpassung des Übertragungssystems an veränderte Übertragungsbedingungen erreicht werden kann.

In Figur 9.3 sind die Eingangsdaten dargestellt, die dem Übertragungssystem bekannt sein müssen. Dabei handelt es sich entweder um feste Größen (Eckdaten), die systemspezifisch und unveränderlich sind (z.B. maximale Sendeleistung Pmax, Kanalbandbreite $B_{nom}$, Modulationsart, Roll-Off-Faktor r), um TeilnehmerAnforderungen (wie die geforderte Bitfehlerrate $BER_{req}$ oder die geforderte Symbolrate $D_{req}$) oder um Kanaleigenschaften, die in speziellen Messzyklen ermittelt werden müssen (Streckendämpfung $A_{link}$, spektrale Rauschleistungsdichte $N_{meas}$).

Für diese Eingangsdaten, die zum Einstiegszeitpunkt gültig sind, wird die Verbindung des Teilnehmers zur Basisstation organisiert, ist der Datensatz "Input-Data" vollständig, können die Übertragungeigenschaften festgelegt werden.

Dazu wird zunächst die effektive Bandbreite B des Übertragungssystems (die durch Filterung mit dem Roll-Off-Faktor r reduzierte Kanalbandbreite) bestimmt.

Anschließend wird aus der effektiven Bandbreite B die mittlere Breite δ eines komprimierten Impulses berechnet. Die Berechnung von δ hat den Hintergrund, dass in dem später durchzuführenden Vorgang der Frequenzspreizung jedes zu übertragende Symbol in einen sin(x)/x-förmigen Impuls umgewandelt wird. Ein derartiger Impuls hat die volle Bandbreite B und eine mittlere zeitliche Breite von δ = 1/B. Vor der Übertragung wird der sin(x)/x-Impuls in einen Chirpimpuls gleicher Bandbreite umgewandelt. Im Empfänger wird der Chirpimpuls komprimiert. Der komprimierte Impuls hat wieder einen sin(x)/x-förmigen Verlauf und die mittlere Breite δ.

Im folgenden Feld wird die Chirp-Dauer T festgelegt Die Chirp-Dauer T wird auf die im Kanal (eventuell periodisch) auftretenden breitbandigen Störungen abgestimmt. Haben diese Störungen die Periode $T_n$, dann muss die einzustellende Chirp-Dauer T kleiner gewählt werden als $T_n$.

In dem sich anschließenden Feld wird festgehalten, auf weiche der drei Übertragungsgrößen (Übertragungsgeschwindigkeit, BER und Sendeleistung) die höchste Priorität (Priorität 1) und die zweithöchste Priorität (Priorität 2) gesetzt wird. Der weitere Programmablauf wird dadurch bestimmt. Für die drei möglichen Entscheidungen (Priorität 1 betreffend) werden im folgenden mit Verweis auf die Abbildungsnummern die entsprechenden Programmschritte dargestellt:

[I]. Höchste Priorität auf Übertragungsgeschwindigkeit (Figur 9.4)

Im ersten Schritt (s. Figur 9.4) wird aus der geforderten Symbolrate $D_{req}$ und der effektiven Bandbreite B der notwendige Abstand k benachbarter Symbole berechnet. Vorausgesetzt wird hier, dass dieser Abstand ein ganzzahliges Vielfaches der mittleren Impulsbreite δ ist. Die Distanz k wird in Einheiten von δ angegeben.

Im zweiten Schritt wird die Priorität 2 abgefragt.

[I]; Priorität 2 auf BER

- Zwingend ist also die Einhaltung einer geforderten BER. Aus einer im Speicher abgelegten Tabelle wird für die betreffende Modulationsart (im Beispiel QPSK) das für die geforderte Bitfehlerrate $BEF_{req}$ im Empfänger notwendige Verhältnis $E_s/N$ abgelesen. (Es bezeichnet die Bit-Energie und N die spektrale Rauschleistungsdichte). Für eine BER von $10^{-3}$ ist laut dargestellter Grafik beispielsweise ein $E_s/N$ von 10 dB erforderlich. Die Prozedur verzweigt zum Eintrittspunkt 7 (siehe Figur 9.7)

- Aus dem berechneten Verhältnis $E_S/N$, der gemessenen Streckendämpfung $A_{link}$, der Rauschleistungsdichte $N_{meas}$,

der effektiven Bandbreite B und der Impulsdistanz k wird die benötigte Sendeleistung $P_{xmit}$ bestimmt.
Die Prozedur verzweigt zum Eintrittspunkt 8 (siehe Figur 9.7)

- Aus dem Distanzfaktor k und der mittleren Impulsbreite $\delta$ wird der Abstand $\Delta t$ benachbarter Symbole (= Symboldauer) in Zeiteinheiten [sec] berechnet. Mit diesem Symbolabstand $\Delta t$ wird die spätere Übertragung durchgeführt.

- Im folgenden Schritt wird die vorgesehene Symbolrate D der Übertragung bestimmt.

- Im nächsten Schritt wird die Anzahl n der nach einer durchgeführten Zeitspreizung überlappenden Chirpimpulse bestimmt. Beim Vorgang der Zeitspreizung werden die einzelnen sin(x)/x-Impulse um den Faktor $\psi = BT$ zeitgespreizt. Ein Einzelimpuls der mittleren Breite $\delta$ wird in einen Chirpimpuls der Breite T umgewandelt. Ist die Chirp-Dauer T größer als die Symboldauer $\Delta t$, dann können wir von einer zeitgespreizten Übertragung der Symbole sprechen. In diesem Fall überlappen sich benachbarte (gechirpte) Symbole mehr oder weniger stark. Der Quotient n = BT/k (=T/$\Delta t$) gibt die Anzahl der Symbole an, die sich zu einem beliebigen Zeitpunkt überlappen. Dieser Wert n kann als das eigentliche Maß der Zeitspreizung angesehen werden.
Die Prozedur verzweigt zum Eintrittspunkt 9 der Adaptiven Prozedur (siehe Figur 9.8).

[I]; Priorität 2 auf Transmitter Power (Figur 9.4)

- Gesendet werden soll mit der festgelegten Leistung $P_{xmit}$
Die Prozedur verzweigt zum Eintrittspunkt 6 (siehe Figur 9.6)

- Aus der Sendeleistung, der Streckendämpfung $A_{link}$, der Rauschleistungsdichte $N_{meas}$, der effektiven Bandbreite und dem Distanzfaktor k wird das erreichbare $E_S/N$ berechnet.

- Aus einer im Speicher abgelegten Tabelle wird für den vorliegenden Modulationstyp (im Beispiel QPSK) die für das ermittelte E&/N erreichbare Bitfehlerrate bestimmt.
Die Prozedur verzweigt zum Eintrittspunkt 8 (siehe Figur 9.7)

- Berechnet werden Symbolabstand $\Delta t$, Symbolrate D und die Anzahl n der überlappenden Impulse.
Die Prozedur verzweigt zum Eintrittspunkt 9 der Adaptiven Prozedur (siehe Figur 9.8)

Für den Fall, dass die höchste Priorität der Übertragung auf das Erreichen einer bestimmten Übertragungsgeschwindigkeit gelegt wird und für die Festlegung einer 2. Priorität entweder auf das Erreichen einer bestimmten BER oder auf die Einhaltung einer vorgegebenen Sendeleistung sind die Programmabläufe detailliert geschildert worden. Beide prioritätsbestimmten Teilprozeduren verzweigen nach Bestimmung aller Parameter der Übertragung letztlich zur Adaptiven Prozedur, dargestellt in Figur 9.8. Die Wirkungsweise dieser Prozedur wird in einem späteren Abschnitt demonstriert.

[II] Höchste Priorität auf Einhaltung einer geforderten BER (Figur 9.5)

Die Prozedur startet am Eintrittspunkt 3 (siehe Figur 9.5). Für die verlangte Bitfehlerrate wird das notwendige $E_S/N$ bestimmt.
Anschließend wird die zweite Priorität abgefragt.

[II]; Priorität 2 auf Übertragungsgeschwindigkeit

- Bestimmung der maximal möglichen Empfangsleistung unter der Voraussetzung, dass der Sender die maximale Sendeleistung $P_{max}$ abgibt.

- Bestimmung des für diese Empfangsleistung notwendigen Faktors k (Welcher Systemgewinn G = k gewährleistet im Empfänger ein ausreichend hohes Signal-zu-Rauschverhäitnis ?)
Die Prozedur verzweigt zum Eintrittspunkt 7 (siehe Figur 9.7).

- Mit dem ermittelten Distanzfaktor k wird die erforderliche Sendeleistung $P_{xmjt}$ berechnet. (Die bisher abgelaufene Prozedur lässt erwarten, dass $P_{xmit}$ bis auf einen Rundungsfehler in etwa der maximalen Sendeleistung $P_{max}$ gleicht).

- Berechnet werden Symbolabstand $\Delta t$, Symbolrate D und die Anzahl n der überlappenden Impulse.
  Die Prozedur verzweigt zum Eintrittspunkt 9 der Adaptiven Prozedur (siehe Figur 9.8)

[II]; Priorität 2 auf eine vorgegebene reduzierte Sendeleistung (Figur 9.5)

- Für die vorgegebene Sendeleistung wird die erreichbare Empfangsleistung ermittelt.

- Bestimmung des für diese Empfangsleistung notwendigen Faktors k (weicher Systemgewinn G = k gewährleistet das im Empfänger geforderte $E_s/N$ ?).
  Die Prozedur verzweigt zum Eintrittspunkt 7 (siehe Figur 9.7).

- Mit dem ermittelten Distanzfaktor k wird die erforderliche Sendeleistung $P_{xmit}$ berechnet. (Die bisher abgelaufene Prozedur lässt erwarten, dass die erforderliche Sendeleistung $P_{xmit}$ bis auf einen Rundungsfehler der vorgegebenen Sendeleistung gleicht.)

- Berechnet werden Symbolabstand $\Delta t$, Symbolrate D und die Anzahl n der überlappenden Impulse.
  Die Prozedur verzweigt zum Eintrittspunkt 9 der Adaptiven Prozedur (siehe Figur 9.8).

[III] Höchste Priorität auf Einhaltung einer vorgegebenen Sendeleistung (Figur 9.6)

Die Prozedur startet am Eintrittspunkt 5 (siehe Figur 9.6).
Für die vorgegebene Sendeleistung wird die erreichbare Empfangsleistung ermittelt.
Anschließend wird die zweite Priorität festgelegt.

[III]; Priorität 2 auf die Einhaltung einer vorgegebenen BER

- Bestimmung des zur Einhaltung dieser BER im Empfänger notwendigen $E_s/N$.
  Die Prozedur verzweigt zum Eintrittspunkt 4 (siehe Figur 9.5).

- Bestimmung des für dieses $E_s/N$ notwendigen Faktors k-(welcher Systemgewinn G = k gewährleistet im Empfänger ein ausreichend hohes Signal-zu-Rauschverhältnis?).
  Die Prozedur verzweigt zum Eintrittspunkt 7 (siehe Figur 9.7).

- Mit dem ermittelten Distanzfaktor k wird die erforderliche Sendeleistung $P_{xmjt}$ berechnet. (Die bisher abgelaufene Prozedur lässt erwarten, dass $P_{xmjt}$ bis auf eine auftretende Rundungsdifferenz der vorgegebenen Sendeleistung gleicht).

- Berechnet werden Symbolabstand $\Delta t$, Symbolrate D und die Anzahl n der übertappenden Impulse.
  Die Prozedur verzweigt zum Eintrittspunkt 9 der Adaptiven Prozedur (siehe Figur 9.8).

[III]; Priorität 2 auf die Einhaltung einer vorgegebenen Übertragungsgeschwindigkeit (siehe Figur 9.6)

- Bestimmung des bei Einhaltung der gewünschten Symbolrate $D_{req}$ erreichbaren Faktors k (welcher Systemgewinn G = k ist noch erreichbar, wenn bei einer Bandbreite B mit einer Datenrate $D_{req}$ übertragen werden soll?).

- Bestimmung des mit dem errechneten Distanzfaktor k noch erreichbaren ES/N.

- Aus einer im Speicher abgelegten Tabelle wird für den vorliegenden Modulationstyp (im Beispie! QPSK) die für das ermittelte $E_s/N$ erreichbare Bitfehlerrate bestimmt.

Die Prozedur verzweigt zum Eintrittspunkt 8 (siehe Figur 9.7).

- Berechnet werden Symbolabstand $\Delta t$, Symbolrate D und die Anzahl n der überlappenden Impulse.
  Die Prozedur verzweigt zum Eintrittspunkt 9 der Adaptiven Prozedur (siehe Figur 9.8).

Am Beispiel des zuletzt dargestellten Falls III (Priorität 1 auf die Einhaltung einer vorgegebenen Sendeleistung, Priorität 2 auf die Einhaltung einer vorgegebenen Übertragungsgeschwindigkeit) soll anschließend die Wirkungsweise der Adaptiven Prozedur (vgl. Abb. 9.8) verdeutlicht werden.
Die Adaptive Prozedur startet am Eintrittspunkt 9 (siehe Figur 9.8)

- Zunächst findet eine Prüfung statt, ob eine Datenübertragung mit den ermittelten und übergebenen Parametern (Symbolrate, BER, Sendeleistung) stattfinden kann. Wenn das Übertragungssystem den so bestimmten Betriebsfall zulässt, dann werden die Sende/Empfangseinrichtungen entsprechend eingerichtet, und die Übertragung beginnt. Anschließend verzweigt die Prozedur wieder zum Start (siehe Figur 9.3).

Falls das Prüfungsergebnis negativ ausfällt, wird in der Reihenfolge der festgelegten Prioritäten überprüft, welche der geforderten Parameter nicht eingehalten werden.

- Ist die Sendeleistung nicht ausreichend, dann wird der Parameter $P_{xmjt}$ neu gesetzt, und die Prozedur verzweigt zum Eintrittspunkt 5. Mit der neugewählten Sendeleistung werden auch die übrigen Parameter neu bestimmt. Haben sich zwischenzeitlich die Übertragungsbedingungen (Streckendämpfung, Rauschleistungsdichte) geändert, dann werden die Änderungen mit in die Neubestimmung aufgenommen. Wird die Adaptive Prozedur wieder erreicht, dann beginnt die Prüfung erneut. Diese Schleife wird so lange durchlaufen, bis die notwendige Sendeleistung eingestellt ist.

- Wird (entsprechend Priorität 2) die geforderte Übertragungsgeschwindigkeit nicht erreicht, dann wird zunächst geprüft, ob Reserven für eine Erhöhung der Symbolrate bestehen. Falls der Distanzfaktor k bereits den Wert 1 hat, existieren keinerlei Reserven. In diesem Fall ist die Symbolrate gleich der effektiven Bandbreite. Ein Einzelsymbol hat die volle Bandbreite, das heißt, die Obergrenze der Symbolrate ist erreicht. Eine Frequenzspreizung findet nicht statt, der Systemgewinn beträgt G = k = 1. Eine Erhöhung der für den Teilnehmer wirksamen Übertragungsrate ist nur durch eine Verlängerung seines Zeitschützes im TDMA-Rahmen zu erreichen. Das setzt eine Verringerung der gesamten Systembelastung, ggf. ein Warten auf diese verringerte Systemauslastung voraus. Ist diese erreicht, dann kann die gewünschte Verbindung hergestellt werden. Die Prozedur verzweigt zum - Start (Figur 9.3).
  Falls der Wert k bei der Abfrage einen Wert k > 1 hat, dann besteht die Möglichkeit, die Symbolrate zu erhöhen und im Gegenzug die Frequenzspreizung bzw. den dazugehörigen Systemgewinn G = k zu verringern: Dazu wird k zunächst um 1 vermindert. Zu erwarten ist in diesem Fall eine Erhöhung der Bitfehlerrate. Ob diese erhöhte BER tragbar ist, wird wieder in einem Schleifendurchlauf (Sprung zu Eintrittspunkt 2) entschieden. Ist in der Schleife die Adaptive Prozedur erreicht, beginnt dieser Ablauf von neuem, bis die geforderte Übertragungsgeschwindigkeit erreicht ist.

- Wird (entsprechend Priorität 3) in der Systemabfrage die geforderte BER nicht erreicht, dann wird nach der Prioritätenliste entschieden, ob die Datenrate oder die Sendeleistung variiert werden kann. Im betrachteten Fall hat eine feste Sendeleistung Priorität, also verzweigt die Prozedur zur Änderung der Symbolrate, in diesem Fall zu einer Verringerung der Symbolrate. Dazu wird der Distanzfaktor k um 1 erhöht, der Symbolabstand vergrößert sich. Ob der neue Symbolabstand ausreichend hoch ist, um die gewünschte BER einzuhalten, wird in einem Schleifendurchlauf (Sprung zu Eintrittspunkt 6; siehe Figur 9.6) untersucht. Ist die dort angestoßene Prozedur durchgelaufen bis zur Adaptiven Prozedur (Figur 9.8), dann läuft die Schleife nötigenfalls erneut ab, bis die geforderte BER erreicht ist.

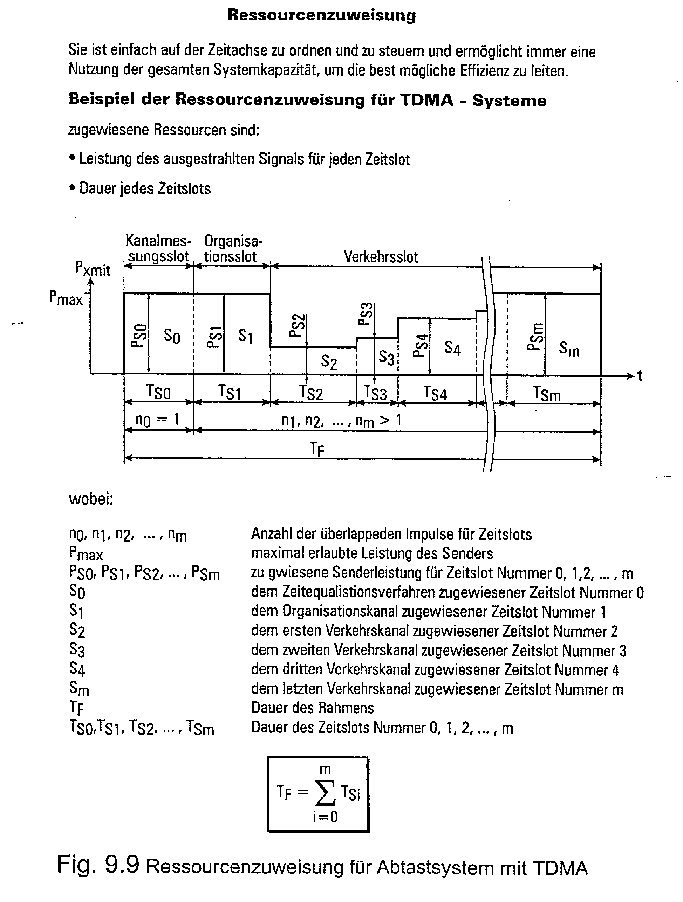

Nachfolgend wird die Verteilung der Ressourcen Sendeleistung und Zeitschlitzlänge auf die einzelnen Teilnehmerstationen in einem erfindungsgemäßen Übertragungssystem anhand der Abbildungen Figur 9.9 bis 9.14 beschrieben.
In Figur 9.9 ist ein TDMA-Rahmen der Rahmenlänge $T_F$ dargestellt. Der Rahmen ist aufgeteilt in ein Intervall $T_{S0}$ zur Kanalmessung, einen Organisationskanal der Länge $T_{S1}$ und m voneinander unabhängige Nachrichtenkanäle mit den Slotbreiten $T_{S2}, T_{S3}, \ldots T_{sm}$. Jedem dieser Zeitslots kann eine Sendeleistung $P_s$ zugewiesen werden ($P_{S0}, P_{S1} \ldots P_{Sm}$). Die Sendeleistung der einzelnen Kanäle ist auf einen Maximalwert $P_{max}$ begrenzt Mit der Zahl n ($n_0, n_1, \ldots, n_m$) wird die Anzahl der sich zu einem beliebigen Zeitpunkt im betreffenden Slot 0, 1, ..., m überlappenden Impulse bezeichnet. Der Wert n ist von der im jeweiligen Slot erreichten Symboldauer und der Chirp-Dauer T abhängig (N = T /$\Delta t$), Nimmt man den oben eingeführten Distanzfaktor k (den Quotienten aus effektiver Bandbreite und verwirklichter Symbolrate D) und das BT-Produkt des zur Zeitspreizung verwendeten Chirpfilters als Grundlage der Berechnung, dann bestimmt sich der Wert n zu n = BT/k.

In Figur 9.9 ist zu erkennen, dass jedem Zeitschlitz separat eine Slotlänge und eine Sendeleistung zugewiesen werden können. Eine Konsequenz der variablen Zeitspreizung, die im Programmschema nach Figur 9.3 bis 9.8 demonstriert wurde, ist die zeitschlitzbezogen unterschiedliche Zahl n der überlappenden Impulse. In jedem Zettschütz teilt sich also die Sendeleistung $P_S$ zu jedem Zeitpunkt auf n überlappende Chirpimpulse auf. Wählt man, wie im Zeitschlitz zur Kanalmessung, den Symbolabstand so groß, dass sich benachbarte Chirpimpulse nicht mehr überlappen (in diesem Fall gilt $\Delta t > T$), dann wird ein einzelner Chirpimpuls, d.h. ein einzelnes übertragenes zeitgespreiztes Symbol, mit der gesamten Sendeleistung des Slots, beispielsweise mit der maximalen Sendeleistung übertragen, wie im Bild für Slot 0 dargestellt.

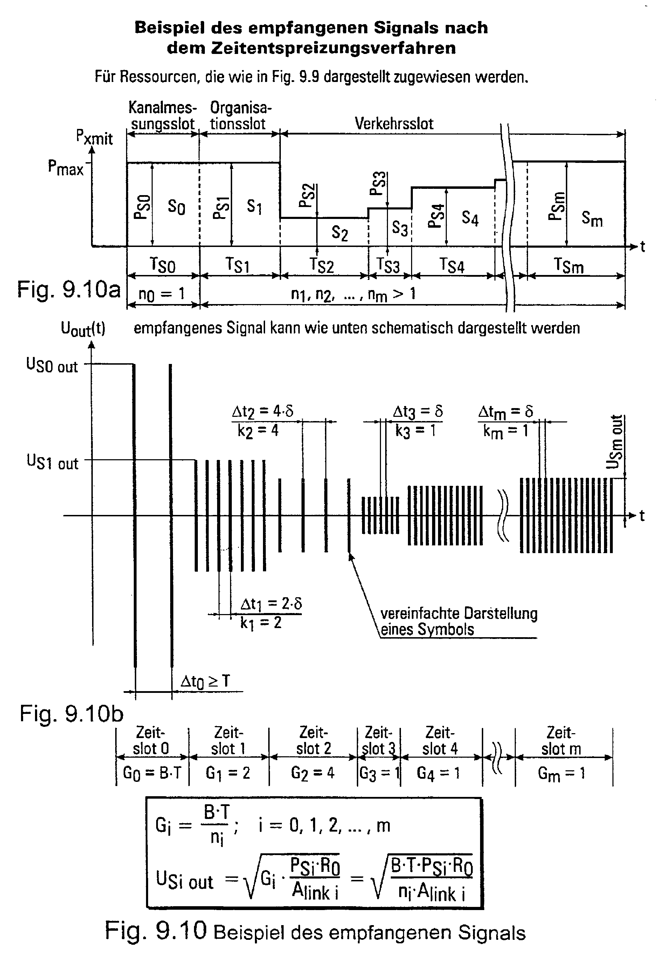

Figur 9.10a zeigt die aus Figur 9.9 bekannte Verteilung der Kanalressourcen eines TDMA-Systems. In dem in Figur 9.10b abgebildeten Diagramm ist schematisch das im Empfänger durch Zeitkompression erhaltene Signal dargestellt.

Erkennbar ist, dass die Spitzenamplitude $U_{S0out}$ des zeitlich komprimierten (entspreizten) Signals für Slot 0 ($P_{so} = P_{max}$, $n_0 = 1$) am größten ist. Im daneben befindlichen Slot 1 ist mit der gleichen Sendeleistung ($P_{S1} = P_{max}$) übertragen worden. Die erreichte Spitzenamplitude $U_{S1out}$ der komprimierten Impulse ist wesentlich kleiner, im Time-Slot 0 [$T_{S0}$] wird ein Symbolabstand von $\Delta t_0 \geq T$ erreicht, für den Time-Slot 1 [$T_{S1}$] ist eine höhere Symbolrate vorgesehen, der Symbolabstand $\Delta t_1$ ist entsprechend geringer. Unten im Bild ist dargestellt, wie für die einzelnen Zeit-Slots der erreichbare Systemgewinn berechnet wird. Die Symbole im Zeitschlitz zur Kanalmessung werden mit einer sehr geringen Symbolrate, dafür aber mit dem maximal möglichen Systemgewinn $G_0 = BT$ übertragen. Erhöht man die Symbolrate unter Beibehaltung der Chirp-Dauer T, dann verringert sich der Systemgewinn bis zu einem Wert G = 1, im Beispiel dargestellt für den Zeitschlitz m [$T_{Sm}$]. Darin hat die Symbolrate D ihr Maximum erreicht, benachbarte Symbole haben den Abstand δ. Die Symbolrate D ist in diesem Fall gleich der effektiven Bandbreite B; eine Frequenzspreizung findet nicht statt (Grenzfall bei höchstmöglicher Datenrate).

Für die Slots 0, 1 und m war eine maximale Sendeleistung angenommen worden ($P_{so} = P_{s1} = P_{sm} = P_{max}$)- Am Beispiel der Slots 2, 3, 4, ... wird im Slot-Diagramm gezeigt, dass die Sendeleistung auch Werte unterhalb von $P_{max}$ annehmen kann, in der Organisation der Teilnehmerzugriffe existieren also drei Freiheitsgrade - die Zeitschlitzfänge, die Symbolrate innerhalb der einzelnen Zeitschlitze und die für die einzelnen Slots vorgesehene Sendeleistung.

Betrachtet man etwa Slot 3, dann wird deutlich, dass mit einer sehr geringen Sendeleistung $P_{S3}$ und mit der maximal möglichen Symbolrate 1/δ gesendet wird. Diese Kombination wird in der Regel nur dann möglich sein, wenn bei gegebener Rauschleistungsdichte die vom Sendesignal zu überwindende Distanz gering ist. Den anderen Extremfall - maximale Sendeleistung bei sehr geringer Symbolrate - demonstriert das Intervall zur Kanalmessung (Slot 0). Für Messzwecke geht es darum, die beiden Impulse besonders gegen Rauschstörungen gesichert, d.h. mit erhöhtem S/N zu übertragen. Zu diesem Zweck wird der maximale systemimmanente Spreizgewinn $G_{max} = BT$ für die Übertragung jedes einzelnen Messsymbols aktiviert und zusätzlich die Sendeleistung $P_{xmit}$ maximiert ($P_{xmjt} = P_{max}$).

Zwischen diesen Extremen sind die Slotdaten des TDMA-Rahmens an variable Teilnehmeranforderungen und Übertragungsbedingungen anzupassen. Dabei ist noch ein weiterer Aspekt zu beachten: In der Regel wird die Übertragung durch Multipath-Effekte gestört. Das bedeutet, dass Nachrichtensymbole eines Zeitschlitzes durch Mehrfachreflexionen verzerrt werden und im eigenen Zeitschlitz wie auch in nachfolgenden Zeitschlitzen Intersymbolinterferenzen hervorrufen können. Um die dadurch hervorgerufene Störleistung in nachfolgenden Zeitschlitzen (bezüglich der dort eingestellten Sendeleistung $P_s$) so gering wie möglich zu halten, ist es vorteilhaft, die einzelnen Verkehrs-Zeitschlitze innerhalb des TDMA-Rahmens nach aufsteigender Leistung zu sortieren. Beispiel: $P_{S2} < P_{S3} < P_{S4} < - < P_{Sm}$

In Figur 9.10 zusätzlich dargestellt sind die Formeln zur Bestimmung des Systemgewinns G und der Spitzenamplitude $U_{si\_out}$ des empfängerseitig komprimierten Signals für die einzelnen Zeitschlitze.

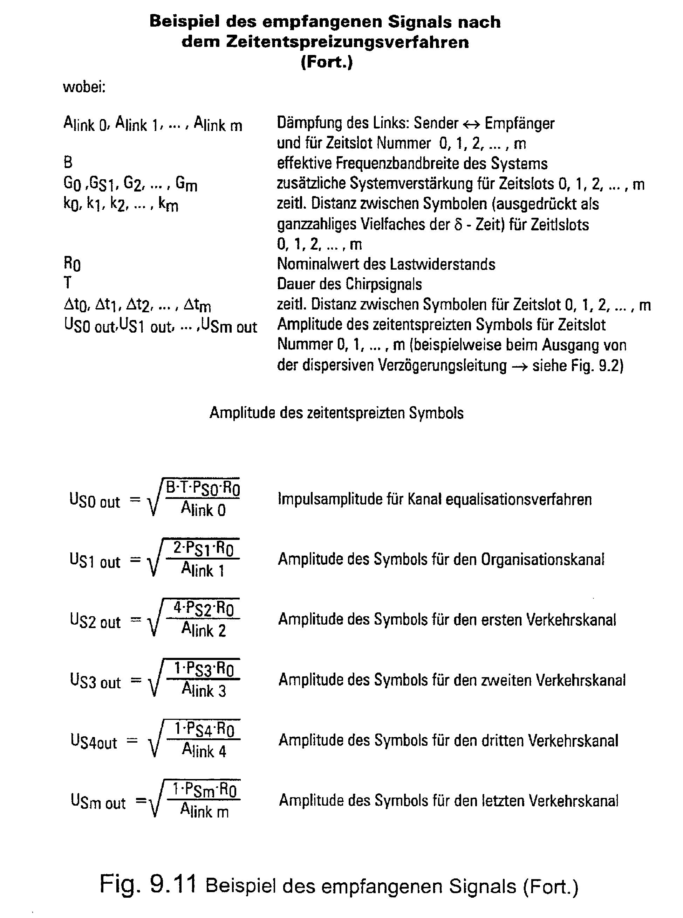

In Figur 9.11 werden die bei einer Slotaufteilung nach Figur 9.10 zu erwartenden Spitzenamplituden der empfängerseitig komprimierten Signale in den Zeitschlitzen 0, 1, ..., m berechnet.

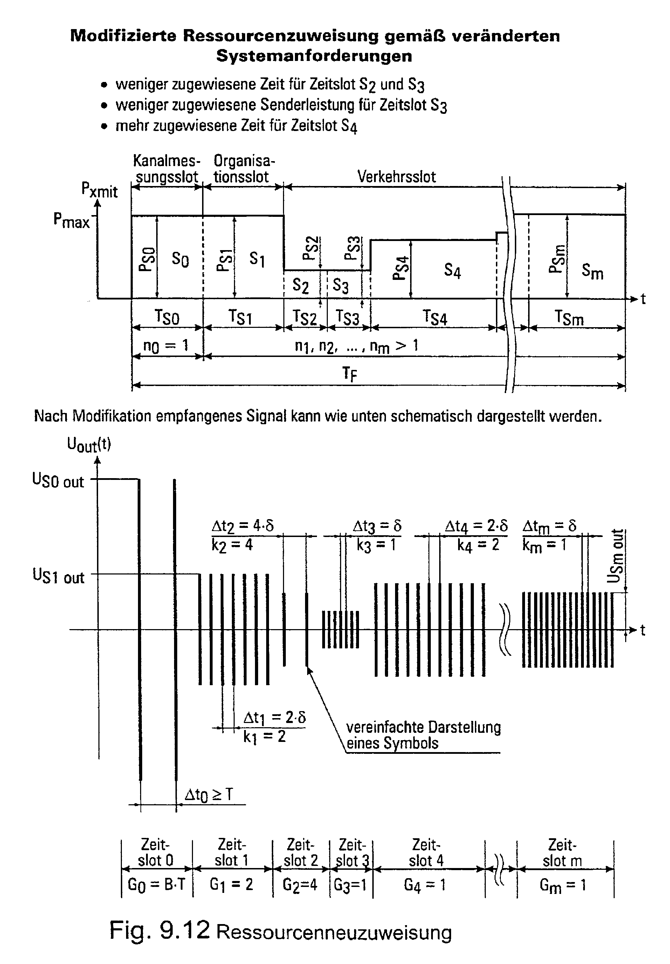

Figur 9.12 gibt ein Beispiel! zur Änderung der Slotdaten bei geänderten Systemanforderungen. Die Referenz dafür ist Figur 9.10. Geändert haben sich die Slotbreiten für die Slots $S_2$, $S_3$ und $S_4$ und die zugewiesene Sendeleistung für Slot 3.

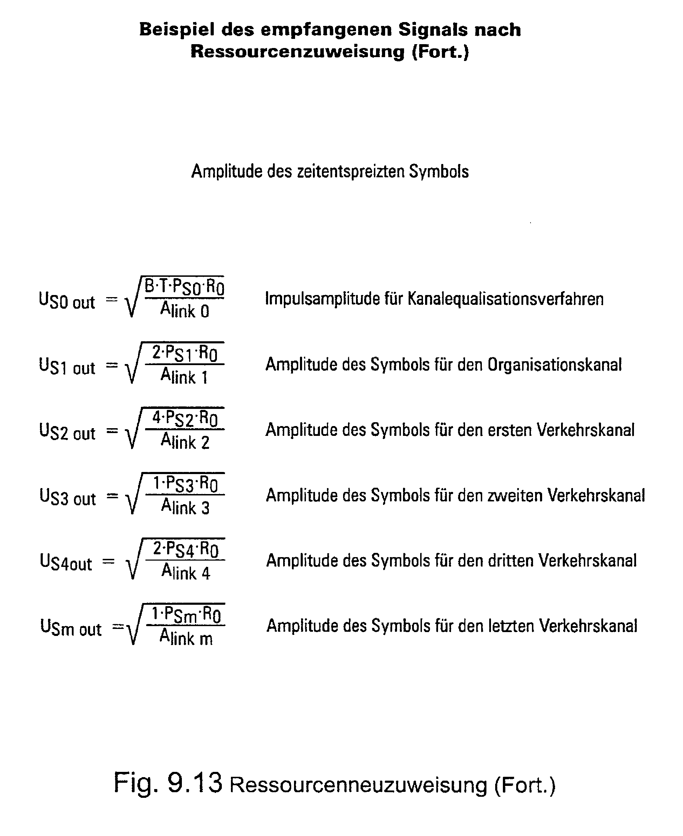

!n Figur 9.13 werden die bei einer geänderten Slotaufteilung nach Figur 9.12 zu erwartenden Spitzenamplituden der empfängerseitig komprimierten Signale in den Zeitschlitzen 0, 1, ..., m berechnet.

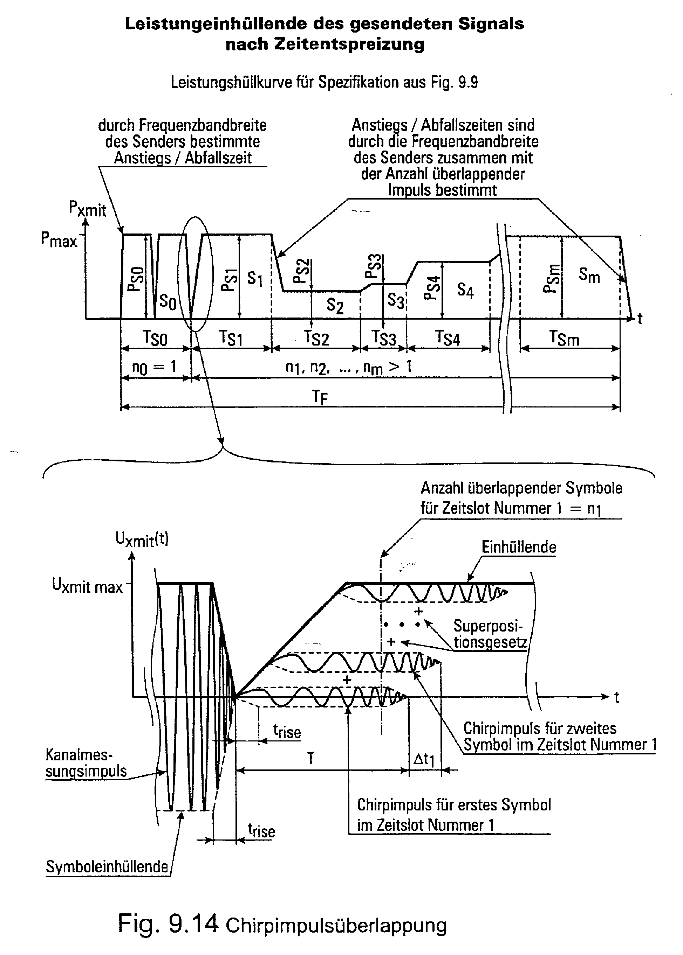

Figur 9.14 stellt für das aus Figur 9.9 bekannte TDMA-Slot-Regime den Verlauf der Einhüllenden des Sendesignals dar. Werden, wie im Messintervall $T_{so}$, einzelne nicht überlappende Chirpimpulse übertragen, dann sind die Anstiegs- bzw. Abfallzeiten von der Bandbreite des Senders abhängig. Werden überlappende Chirpimpulse übertragen, dann haben die Flanken einen flacheren Verlauf. Die Anstiegs- und Abfallzeiten sind in diesem Fall zusätzlich abhängig von der Anzahl n der überlappenden Impulse.

Die Darstellung im unteren Bildteil verdeutlicht diesen Effekt. In einem Ausschnitt hervorgehoben sind das Abklingen des zweiten Chirpimpulses im Messintervall $T_{so}$ und der Verlauf der steigenden Flanke im Synchronisations-

intervall $T_{s1}$.

Herausgestellt ist dabei der Mechanismus der Zeitspreizung bei der Passage eines dispersiven Filters. Diese Zeitspreizung kann man so interpretieren, als würde jedes Symbol in einen Chirpimpuls der Länge T umgewandelt. Die Abfolge von Symbolen im zeitgespreizten Signal stellt sich dann als Folge von Chirpimpulsen gleicher Charakteristik dar, die um den Symbolabstand $\Delta t$ gegeneinander versetzt erzeugt und additiv überlagert werden. Erst nach einem Zeitraum von ca. n $\Delta t$ erreicht die steigende Flanke ihren Endpunkt. (Diese Darstellung ist stark vereinfacht. Wenn eine bipolare Folge von sin(x)/x-Impulsen übertragen wird, dann überlagern sich in Wirklichkeit zeitlich versetzte Chirpimpulse mit statistisch verteiltem Wechsel der Polarität.) Grundsätzlich aber kann der Verlauf der Flanken der Einhüllenden mit diesem Modell erklärt werden.

Die Erfindung und ihre besonderen Vorteile lassen sich wie folgt zusammenfassen: Das erfindungsgemäße Übertragungsverfahren bzw. erfindungsgemäße Mehrfachzugriffssystem arbeitet mit frequenz- und zeitgespreizten Signalen und das erfindungsgemäße Verfahren ermöglicht einen Betrieb mit teilnehmerbezogenen unterschiedlichen und variablen Symbolraten. Jedem Teilnehmer wird unabhängig von der geforderten Symbolrate R die volle Kanalbandbreite B zugewiesen. Bestehen Frequenzreserven, das heißt, ist die Kanalbandbreite größer ais die Symbolrate R, dann werden diese Frequenzreserven automatisch und unmittelbar in einen Systemgewinn durch frequenzgespreizte Übertragung umgesetzt. Die Verfahren zur Frequenz- und Zeitspreizung können allein auf der physikalischen Ebene umgesetzt werden. Dadurch ist es möglich, den Systemgewinn durch einfaches Verändern der Datenrate zu steuern, ohne weitere Systemeigenschaften zu verändern (neu zu initialisieren oder ähnliches).

Das Frequenzspreizverfahren (Symbolweise Quasidirac-Impulsformung mit anschließender Anpassfilterung) garantiert, dass jedes Nachrichtensymbol auf die volle Kanalbandbreite gespreizt wird. Die anschließende Zeitspreizung (Umwandlung der frequenzgespreizten Symbole im Sender in Chirp-Impulse) wird in einfacher Weise dadurch erreicht, dass die Folge frequenzgespreizter Symbole ein dispersives Filter geeigneter Frequenz-Laufzeit-Charakteristik (zum Beispiel ein SAW-Chirp-Filter) passiert.

Die Rückwandlung der Chirp-Signale auf Empfängerseite geschieht mit einem weiteren Chirp-Filter, dessen Frequenz-Laufzeit-Charakteristik umkehrt zu der des sendeseitigen Chirp-Filters ist.

Die beschriebene umgekehrte Frequenz-Laufzeit-Charakteristik zwischen Sende- und Empfangs-Chirp-Filter ist die einzige Bedingung, die zur Rückwandjung erforderlich ist. Werden Chirp-Filter dieser Charakteristik ais passive Bauelemente (beispielsweise in SAW-Technik (SAW = Surface Accustic Wave)) ausgeführt, dann kann die Rückwandlung der Chirp-Signale und bei geeigneter Wahl des Modulationsverfahrens auch die Demodulation der empfangenen Signale vollständig asynchron erfolgen.

Die vollständige Ausnutzung der Gesamtkanalbandbreite für die Übertragung jedes einzelnen Symbols prädestiniert die Sendeimpulse (zeitgespreizte Signale) auch für die Kanalschätzung. Wird ein derartig breitbandiges Symbol (Chirp-Impuls) gesendet, dann regt es den Kanal über seine gesamte Bandbreite mit gleicher Intensität an. Im Empfänger nimmt das Chirp-Filter die Transformation vom Frequenzbereich in den Zeitbereich vor, so dass am Filterausgang unmittelbar die Impuls-Antwort des Kanals erscheint. Mit der symbolweisen Zeitspreizung verbunden ist eine Unterdrükkung von Störungen, die dem Nachrichtensignal auf dem Übertragungsweg überlagert werden. Die empfängerseitige Entspreizung (Kompression) der empfangenen Symbole bewirkt gleichzeitig eine Spreizung (Expansion) der überlagerten Störsignale. Durch diesen Vorgang wird die Störenergie über einen größeren Zeitraum verteilt, die Wahrscheinlichkeit, dass die Informationssymbole zerstört werden, sinkt

Bei dem erfindungsgemäßen Übertragungsverfahren reicht ein einziges Symbol (Chirp-Impuls) aus, um die vollständige Kanalimpulsantwort präzise zu ermitteln. Das schließt nicht aus, dass durch Übertragung mehrerer aufeinanderfolgender Referenzsymbole in einem dem maximalen Delay Spread entsprechenden Abstand diese Genauigkeit durch Mittelwertbildung oder durch Autokorrelation noch gesteigert werden kann.

Das erfindungsgemäße Übertragungsverfahren stellt bereits auf der physikalischen Ebene ein Maß an Flexibilität und Funktionalität zur Verfügung, das andere bekannte Systeme (CDMA, TDMA, FDMA) erst auf übergeordneten Ebenen der Signalverarbeitung mittels Computeroperationen realisieren können.

Um beispielsweise die Übertragungsdatenrate zu halbieren, wird bei dem beschriebenen erfindungsgemäßen Übertragungsverfahren der zeitliche Abstand zwischen zwei aufeinanderfolgenden Symbolen und die Energie des Einzelsymbols verdoppelt. Dadurch werden auch bei halbierter Datenrate die Kanalressourcen vollständig ausgenutzt Für den gleichen Effekt müssten andere System Redundanz in den Datenstrom einfügen (zum Beispiel durch Faltung). Dadurch wird bei unveränderter physikalischer Symbol rate die für einen Benutzer sichtbare Datenrate halbiert.

**Patentansprüche**

1. Steuerungsverfahren für Datenübertragungen zwischen einer Vielzahl von Teilnehmerendgeräten und einer den Teilnehmerendgeräten zugeordneten Basisstation, mit den Schritten:

- teilnehmerspezifisches, variables Zuweisen einer Frequenzspreizung, einer Zeitspreizung sowie einer Sendeleistung pro Informationssymbol in einem variablen TDMA-Multiplex-Raster für eine Übertragung von Informationssymbolen von und zu jedem Teilnehmerendgerät über einen jeweils zugewiesenen Übertragungskanal, wobei

- die Frequenzspreizung der Informationssymbole senderseitig durch eine Quasi-Dirac-Impulsformung mit anschließender Filterung oder durch eine digitale Signalverarbeitung, die eine Hochtastung bewirkt, vorgenommen wird,

- die Zeitspreizung mittels Faltung eines Informationssymbols mit einem Korrelationssignal vorgenommen wird,

- das teilnehmerspezifische, variable Zuweisen zur dynamischen Anpassung an Bandbreiten- und Bitfehlerraten-Anforderungen eines jeweiligen Teilnehmerendgeräts, an seine Entfernung von der Basisstation und an veränderliche Umweltbedingungen durchgeführt wird, und

- wobei das teilnehmerspezifische, variable Zuweisen derart ausgeführt wird, dass die Datenübertragungen der Informationssymbole zwischen der Vielzahl von Teilnehmerendgräten und der zugeordneten Basisstation in ihrer Gesamtheit stets alle Frequenz- und Leistungsreserven des jeweiligen Übertragungskanals vollständig ausnutzen.

2. Verfahren nach Anspruch 1, bei dem ein Systemgewinn einer Übertragung durch eine Variation einer betreffenden Rate übertragener Informationssymbole gesteuert wird.

3. Verfahren nach Anspruch 1 oder 2, bei dem die Frequenzspreizung und/oder Zeitspreizung in Abhängigkeit von wenigstens einem der Parameter Sendeleistung, Bitfehterrate und/oder Übertragungsgeschwindigkeit zugewiesen wird.

4. Verfahren nach einem der vorherigen Ansprüche, wobei durch die senderseitige Frequenzspreizung des Informationssymbols mittels der Quasidirac-Impulsformung mit anschließender Filterung jedes Informationssymbol auf die volle, zur Verfügung stehende Kanalbandbreite gespreizt wird, und wobei das Korrelationssignal ein Chirp-Impulssignal ist.

5. Verfahren nach einem der vorherigen Ansprüche, bei dem die Sendeleistung und/oder eine Bitrate und/oder die Bitfehlerrate der Informationssymbole individuell auf den Teilnehmer abgestimmt werden.

6. Verfahren nach einem der vorherigen Ansprüche, bei dem empfangene frequenz- und zeitgespreizte Referenzsymbole zur Kanalschätzung verwendet werden.

7. Verfahren nach einem der vorherigen Ansprüche, bei dem bei einer Verringerung einer betreffenden Rate übertragener Informationssymbole bei konstanter Kamalbandbreite eine stärkere Frequenzspreizung zugewiesen wird.

8. Verfahren nach Anspruch 7, bei dem die Frequenzspreizung in zwei Schritten vorgenommen wird, nämlich einem ersten Schritt, in dem eine Quasidirac-Impulsformung für jedes einzelne Informationssymbol, unabhängig von der betreffenden Rate übertragener Informationssymbole, erfolgt, und einem zweiten Schritt, in dem die Quasidirac-Impulsfolge einer Bandpaßfilterung unterzogen wird.

9. Verfahren nach einem der vorhergehenden Ansprüche, bei dem vor einer Informationssymbolübertragung empfängerseitig Werte für eine gewünschte Übertragungsgeschwindigkeit, geforderte Bitfehlerrate und eine gewünschte, gegebenenfalls auch eine erlaubte Sendeleistung an die Sendeseite mitgeteilt werden, und bei dem entweder die mitgeteilten Werte für die Übertragung zugewiesen werden, oder - wenn die Einhaltung der Werte nicht möglich ist - andere Werte der genannten Größen derart zugewiesen werden, daß eine Zuweisung wenigstens eines mitgeteilten Werts gegenüber einem anderen mitgeteilten Wert priorisiert wird.

10. Verfahren nach Anspruch 9, bei dem zur Sprachübertragung eine Priorisierung in der Reihenfolge "Sendeleistung, Übertragungsgeschwindigkeit, Bitfehlerrate" und bei der Übertragung von wichtigen Daten die Priorisierung in der Reihenfolge "Bitfehlerrate, Sendeleistung, Übertragungsgeschwindigkeit" erfolgt.

11. Verfahren nach einem der vorhergehenden Ansprüche, bei dem die Sendeleistung in aufeinanderfolgenden Zeitschlitzen, abhängig vom Systemgewinn in einem Zeitschlitz, unterschiedlich zugewiesen wird.

12. Verfahren nach Anspruch 11, bei dem die Übertragung von Informationssymbolen mittels Rahmen mit einer Rahmenlänge ($T_F$) erfolgt, wobei ein Rahmen ein Intervall zur Kanalmessung, wenigstens einen Organisationskanal und m voneinander unabhängige Nachrichtenkanäle aufweist, deren Zeitschlitzlängen entweder gleich oder unterschiedlich sind, und bei dem die Sendeleistung eines einzelnen Kanals in Abhängigkeit vom Systemgewinn zugewiesen wird.

13. Verfahren nach den Ansprüchen 11 und 12, bei dem Teilnehmer-Zeitschlitze in einem TDMA-Rahmen in Abhängigkeit von der zugeordneten Sendeleistung, vorzugsweise nach aufsteigender Sendeleistung sortiert, angeordnet werden.

14. Verfahren nach einem der Ansprüche 12 und 13, bei dem das Zuweisen von Sendeleistung derart erfolgt, dass sich in einem Zeitschlitz die Sendeleistung zu jedem Zeitpunkt auf eine Vielzahl zeitlich überlappender Chirp-Impulse aufteilt.

15. Verfahren nach einem der vorhergehenden Ansprüche, bei dem in einem zur Kanalmessung dienenden Zeitschlitz ein zeitlicher Symbolabstand so groß zugewiesen wird, daß sich benachbarte Chirp-Impulse nicht mehr überlappen.

16. Verfahren nach einem der vorhergehenden Ansprüche, bei dem Kenngrößen eines logischen Kanals, nämlich Zeitschlitzlänge, Symbolrate innerhalb eines Zeitschlitzes und die für einen Zeitschlitz vorgesehene Sendeleistung, individuell für jeden Teilnehmer entsprechend den Eigenschaften des physikalischen Kanals und teilnehmerspezifischen Anforderungen zugewiesen werden.

17. Verfahren nach einem der vorhergehenden Ansprüche, bei dem zur Zeitspreizung solche Korrelationssignale zugewiesen werden, deren Autokorrelation die erste Nyquistbedingung erfüllt, daß die Autokorrelation zu den Symbolzeitpunkten den Wert Null annimmt.

18. Verfahren nach einem der vorhergehenden Ansprüche, bei dem als Korrelationssignale Chirp-Signale zugewiesen werden, die mit einem Betragsfrequenzgang eines Wurzel-Nyquist-Filters gewichtet werden.

19. Verfahren nach einem der vorhergehenden Ansprüche, bei dem das zuzuweisende Korrelationssignal vor Beginn der Informationsübertragung in Abhängigkeit von äußeren Bedingungen aus einer Menge von möglichen Korrelationssignalen ausgewählt wird.

20. Steuervorrichtung mit Mitteln zur Durchführung eines Verfahrens nach einem der vorstehenden Ansprüche.

21. Basisstation eines Funkkommunikationsnetzwerks, mit einer Steuervorrichtung nach Anspruch 20.

**Claims**

1. Control method for data transmissions between a plurality of subscriber terminals and a base station assigned to the subscriber terminals, comprising the steps of:

   - subscriber-specific variable allocation of a frequency spread, a time spread and a transmission power per information symbol in a variable TDMA multiplex grid for the transmission of information symbols from and to each subscriber terminal via an assigned transmission channel in each case, wherein
   - the frequency spread of the information symbols is undertaken at the transmission end by a quasi-Dirac pulse forming followed by filtering or by digital signal processing which brings about high modulation,
   - the time spread is undertaken by convolution of an information symbol with a correlation signal,
   - the subscriber-specific variable allocation is carried out for dynamic compliance with bandwidth and bit error rate requirements of a subscriber terminal, with its distance from the base station and with changing environmental conditions, and
   - the subscriber-specific variable allocation is carried out such that the data transmissions of the information symbols between the plurality of subscriber terminals and the associated base station in their entirety always make full use of all the frequency and power reserves of the respective transmission channel

2. Method according to claim 1, wherein a system gain of a transmission is controlled by varying a relevant rate of information symbols transmitted.

3. Method according to claim 1 or 2, wherein the frequency spread and/or time spread is allocated as a function of at least one of the parameters of transmission power, bit error rate and/or transmission speed.

4.  Method according to one of the preceding claims, wherein as a result of the frequency spread of the information symbol at the transmission end using the quasi-Dirac pulse forming followed by filtering, each information symbol is spread to the full channel bandwidth available, and wherein the correlation signal is a chirp pulse signal.

5.  Method according to one of the preceding claims, wherein the transmission power and/or a bit rate and/or the bit error rate of the information symbols are individually tailored to the subscriber.

6.  Method according to one of the preceding claims, wherein frequency- and time-spread reference symbols received are used to evaluate the channel.

7.  Method according to one of the preceding claims, wherein, in the event of a reduction in a relevant rate of information symbols transmitted at a constant channel bandwidth, a greater frequency spread is allocated.

8.  Method according to claim 7, wherein the frequency spread is carried out in two steps, namely a first step in which a quasi-Dirac pulse forming takes place for each individual information symbol, independently of the relevant rate of information symbols transmitted, and a second step in which the quasi-Dirac pulse sequence is subjected to band pass filtering.

9.  Method according to one of the preceding claims, wherein before the transmission of information symbols, values for a desired transmission speed, the required bit error rate and a desired and optionally also permitted transmission power are notified to the transmission end, and wherein either the values notified are allocated for the transmission, or - if it is not possible to adhere to the values - other values of the above-mentioned variables are allocated such that the allocation of at least one notified value is prioritised over another notified value.

10. Method according to claim 9, wherein, for speech transmission, prioritisation is carried out in the order "transmission power, transmission speed, bit error rate" and, for the transmission of important data, prioritisation is carried out in the order "bit error rate, transmission power, transmission speed".

11. Method according to one of the preceding claims, wherein the transmission power is allocated differently in successive time slots, depending on the system gain in a time slot.

12. Method according to claim 11, wherein the transmission of information symbols is carried out by means of frames with a frame length ($T_F$), where a frame has an interval for channel measurement, at least one organisation channel and m message channels that are independent of one another, the time slot lengths of which are either identical or different, and wherein the transmission power of an individual channel is allocated as a function of the system gain.

13. Method according to claims 11 and 12, wherein subscriber time slots are arranged in a TDMA frame as a function of the associated transmission power, preferably graded in ascending order of transmission power.

14. Method according to one of claims 12 and 13, wherein the allocation of transmission power is carried out such that in one time slot the transmission power at each moment is divided up between a plurality of chirp pulses overlapping in time.

15. Method according to one of the preceding claims, wherein in a time slot used for channel measurement a sufficiently long time interval between symbols is allocated such that adjacent chirp pulses no longer overlap.

16. Method according to one of the preceding claims, wherein characteristics of a logic channel, namely time slot length, symbol rate within a time slot and the transmission power provided for a time slot are individually allocated for each subscriber in accordance with the properties of the physical channel and subscriber-specific requirements.

17. Method according to one of the preceding claims, wherein for the time spread correlation signals are allocated of the kind whose autocorrelation fulfils the first Nyquist condition that the autocorrelation at the symbol times assumes the value zero.

18. Method according to one of the preceding claims, wherein chirp signals that are weighted with a sum frequency response of a Root-Raised-Cosine filter are allocated as correlation signals.

**19.** Method according to one of the preceding claims, wherein the correlation signal that is to be allocated is selected from a number of possible correlation signals before the start of the information transmission as a function of external conditions.

**20.** Control apparatus with means for carrying out a method according to one of the preceding claims.

**21.** Base station of a telecommunications network, having a control apparatus according to claim 20.


**Revendications**

**1.** Procédé de contrôle pour la transmission de données entre une pluralité de terminaux d'abonnés et une station de base associée aux terminaux d'abonnés, avec les étapes :

d'affectation variable, spécifique à l'abonné, d'un étalement de fréquence, d'un étalement temporel ainsi que d'une puissance d'émission par symbole d'information dans une trame variable de multiplexage AMRT pour une transmission de symboles d'information à partir de chaque terminal d'abonnés et vers celui-ci sur, dans chaque cas, un canal de transmission affecté, dans lequel

- l'étalement de fréquence des symboles d'information du côté de l'émetteur est réalisé au moyen d'une formation d'impulsion quasi-Dirac avec filtrage consécutif ou au moyen d'un traitement numérique de signal, réalisant un sur-échantillonnage,
- l'étalement temporel est réalisé au moyen d'une convolution d'un symbole d'information avec un signal de corrélation,
- l'affectation variable, spécifique à l'abonné, est réalisée par adaptation dynamique en fonction des exigences de largeur de bande et de taux d'erreur sur les bits du terminal d'abonnés dans chaque cas concerné, en fonction de sa distance de la station de base et de conditions environnementales variables, et
- dans lequel l'affectation variable, spécifique à l'abonné, est réalisée de sorte que la transmission de données des symboles d'information entre la pluralité de terminaux d'abonnés et la station de base associée exploite toujours, et globalement, toutes les réserves de fréquence et de puissance du canal de transmission dans chaque cas concerné.

**2.** Procédé selon la revendication 1, dans lequel le gain du système d'une transmission est commandé par une variation du taux de symboles d'information transmis concerné.

**3.** Procédé selon la revendication 1 ou 2, dans lequel l'étalement de fréquence et/ou l'étalement dans le temps est ajusté en fonction d'au moins un des paramètres de puissance d'émission, taux d'erreurs sur les bits et/ou vitesse de transmission.

**4.** Procédé selon l'une des revendications précédentes, dans lequel, du fait de l'étalement de fréquence du symbole d'information côté émetteur grâce à une formation d'impulsion quasi-Dirac avec filtrage consécutif, chaque symbole d'information est étalé sur la totalité de la largeur de bande de canal disponible et dans lequel le signal de corrélation est un signal impulsionnel à balayage rapide de fréquence (*chirp*).

**5.** Procédé selon l'une des revendications précédentes, dans lequel la puissance d'émission et/ou un débit binaire et/ou le taux d'erreurs sur les bits des symboles d'information sont adaptés individuellement à l'abonné.

**6.** Procédé selon l'une des revendications précédentes, dans lequel des symboles de référence étalés en fréquence et dans le temps sont utilisés pour l'estimation du canal.

**7.** Procédé selon l'une des revendications précédentes, dans lequel une réduction du taux de symboles d'information transmis pour une largeur de bande constante de canal a pour conséquence un étalement plus important de la fréquence.

**8.** Procédé selon la revendication 7, dans lequel l'étalement de fréquence s'effectue en deux étapes, à savoir une première étape, dans laquelle une formation d'impulsion quasi-Dirac s'effectue pour chaque symbole d'information individuel, indépendamment du taux de symboles d'information transmis, et une seconde étape, dans laquelle le train d'impulsions quasi-Dirac est soumis à un filtrage passe-bande.

**9.** Procédé selon l'une des revendications précédentes, dans lequel avant une transmission de symboles d'information côté récepteur sont communiquées au côté émetteur des valeurs pour une vitesse de transmission souhaitée, le taux d'erreurs sur les bits requis et une puissance d'émission souhaitée, éventuellement aussi permise, et dans lequel, soit les valeurs communiquées sont affectées à la transmission, soit - si le respect des valeurs n'est pas possible - des valeurs autres que lesdites valeurs sont affectées de sorte que l'affectation d'au moins une valeur communiquée par rapport à une autre valeur communiquée devient prioritaire.

**10.** Procédé selon la revendication 9, dans lequel pour la transmission de la parole, l'obtention de la priorité s'effectue dans l'ordre "puissance d'émission, vitesse de transmission, taux d'erreurs sur les bits" et lors de la transmission de données importantes, l'obtention de la priorité s'effectue dans l'ordre "taux d'erreurs sur les bits, puissance d'émission, vitesse de transmission".

**11.** Procédé selon l'une des revendications précédentes, dans lequel la puissance d'émission est réglée différemment en créneaux temporels successifs, en fonction du gain du système dans un créneau temporel.

**12.** Procédé selon la revendication 11, dans lequel la transmission de symboles d'information s'effectue au moyen d'une trame avec une longueur de trame ($T_F$), sachant qu'une trame présente un intervalle pour la mesure du canal, au moins un canal d'organisation et m canaux d'information indépendants les uns des autres, dont les longueurs de créneaux temporels sont soit semblables soit différentes, et dans lequel la puissance d'émission d'un canal individuel est déterminée en fonction du gain du système.

**13.** Procédé selon les revendications 11 et 12, dans lequel les créneaux temporels des abonnés sont disposés dans une trame AMRT en fonction de la puissance d'émission affectée, triée de préférence selon une puissance d'émission croissante.

**14.** Procédé selon l'une des revendications 12 et 13, dans lequel l'affectation de la puissance d'émission est réalisée de sorte que, dans un créneau temporel, la puissance d'émission à chaque instant est répartie sur une pluralité d'impulsions à balayage rapide de fréquence (*chirp*) se chevauchant dans le temps.

**15.** Procédé selon l'une des revendications précédentes, dans lequel dans un créneau temporel servant pour la mesure du canal, on affecte un écart temporel de symbole suffisamment grand pour que les impulsions à balayage rapide de fréquence (*chirp*) avoisinantes ne se chevauchent plus.

**16.** Procédé selon l'une des revendications précédentes, dans lequel les grandeurs connues d'un canal logique, à savoir la longueur de créneau temporel, le taux de symboles à l'intérieur d'un créneau temporel et la puissance d'émission prévue pour un créneau temporel, sont réglées individuellement pour chaque abonné en fonction des propriétés du canal physique et d'exigences spécifiques à l'abonné.

**17.** Procédé selon l'une des revendications précédentes, dans lequel les signaux de corrélation, dont l'autocorrélation remplit la première condition de Nyquist, utilisés pour l'étalement temporel sont tels que l'autocorrélation accepte la valeur zéro aux instants des symboles.

**18.** Procédé selon l'une des revendications précédentes, dans lequel sont utilisés comme signaux de corrélation des signaux à balayage rapide de fréquence (*chirp*), qui sont pondérés avec la valeur de la réponse en fréquence d'un filtre racine de Nyquist.

**19.** Procédé selon l'une des revendications précédentes, dans lequel le signal de corrélation à utiliser est sélectionné avant le début de la transmission d'information en fonction de conditions externes à partir d'une quantité de signaux possibles de corrélation.

**20.** Dispositif de contrôle avec des moyens pour la mise en oeuvre d'un procédé selon l'une des revendications précédentes.

**21.** Station de base pour un réseau de radiocommunication avec un dispositif de contrôle selon la revendication 20.

Sende-symbole → **Frequenz-Spreizung** → **Zeit-Spreizung** → **Kanal** → **Zeit-kompression** → **Equalizer** → **Frequenz-kompression** → Empfangs-symbole

**Kanal-Schätzung**

Sender

Empfänger

## Fig. 1

Fig. 2

Fig. 3

EP 1 708 401 B1

Fig. 4

Fig. 5

Fig. 6a
Informationssymbole

Fig. 6b
Meßintervall $T_{Ref}$, Referenzsymbole

Fig. 6c
Summensignal, Quasidiracimpulse

Fig. 6d
Summe aus Referenz- und Datensequenz, AM-moduliert

Fig. 6e
Sendesignal

Fig. 6

Erster Start

Restart

Berechne Referenzpuls
$\approx \sin (x) / x$

Lege Referenzpuls in Speicher ab

Anmerkung:
Benutze komplexe
Arithmetik

Equalisationsperiode ? — Nein

Ja

Sample das komplexe Eingangssignal,
schreibe die Samples in Pufferspeicher

Equalisationsperiode ? — Ja

Nein

Berechne $\sigma_{Noise}$

Berechne Amplitudenschwelle
Schwelle = Faktor * $\sigma_{Noise}$

Nimm den Sample mit größtem Betrag
in Pufferspeicher als Reflektionskoeffezienten

Größter Samplebetrag > Schwelle ? — Nein

Ja

Berechne einen Reflektionspuls aus
Reflektionskoeffizient und Referenzpuls

Normiere die ermittelten
Reflektionskoeffizienten

Betrag des Reflektionspulssamples >
Betrag des Samples in Pufferspeicher ?

Ende

Ja — Nein

Sample in Pufferspeicher : = 0

Sample in Pufferspeicher : = Sample in
Pufferspeicher - Reflektionspulssample

Fig. 7

Fig. 8

EP 1 708 401 B1

Erforderliches $\dfrac{S}{N}$ zur
Einhaltung einer bestimmten BER

QPSK Modulation

vorgeschlagenes System mit k = 1

CDMA

vorgeschlagenes System

vorgeschlagenes System mit k >> 1

Datenrate
pro Kanal

# Fig. 9.1a

Einfache Modifikation des k - Wertes,
die den zeitlichen Abstand zwischen
Symbolen darstellt

$$\Delta t = k \cdot \delta$$

Beispiel

konstante Übertragungsleitung $P_{xmit}$

Fall 1: k = 10                    Fall 2: k = 4

zeitl. entspreiztes Signal,
das ein Symbol darstellt

$U_{out}(t)$

$U_{s\ out} = U_s \cdot \sqrt{10}$

$\Delta t = 10 \cdot \delta$

$U_{out}(t)$

$U_{s\ out} = U_s \cdot \sqrt{4}$

$\Delta t = 4 \cdot \delta$

# Fig. 9.1b

# Fig. 9.1 Systemmerkmale

Fig. 9.2a

Fig. 9.2b

Fig. 9.2c

Fig. 9.2d

Fig. 9.2 Breitbandstörungen

( von Fig. 9.8 )————▶( START )

**Statusanalyse des Systems**

Eingangsdaten:

| | |
|---|---|
| $P_{max}$ | maximal erlaubte Leistung des Senders |
| $B_{nom}$ | nominale Frequenzbandbreite (auf Nullpegel des Senders) |
| $r$ | equivalenter Roll-Off-Faktor für gesamtes System |
| $D_{req}$ | erforderliche Symbolrate |
| QPSK | Modulationsmodus (Beispiel) |
| $N_{meas}$ | gemessene, spektrale Rauschleitungsdichte |
| $A_{link}$ | gemessener Wert der Streckendämpfung |
| $BER_{req}$ | geforderte Bitfehlerrate (BER) |
| T | Chirpimpuls - Dauer |

**Frequenzbandbreite**

$$B := \frac{B_{nom}}{1+r}$$

**Zeitdauer des komprimierten Impulses**

$$\delta := \frac{1}{B}$$

**Eingangsrauschen analysieren und Zeit T wählen**

$$T \leq T_n$$

Prioritäten zuweisen an:

- Übertragungsgeschwindigkeit
- geforderte Bitfehlerrate
- Senderleistung

Höchste Priorität wird zugewiesen an:

| Übertragungs-geschwindigkeit | geforderte Bitfehlerrate | Senderleistung |
|---|---|---|
| ① | ③ | ⑤ |

**Fig. 9.3** Initialisierung und Prioritätseinstellung

①

Ja ⟵ D $_{req}$ > B ? ⟶ Nein

| zeitl. Abstand zwischen Symbolen, ausgedrückt in δ - Einheiten<br><br>k : = 1 | zeitl. Abstand zwischen Symbolen, ausgedrückt in δ - Einheiten<br><br>$k := \mathrm{floor}\left(\dfrac{B}{D_{req}}\right)$ |

von Fig. 9.8 ⟶ ②

| Was ist wichtiger (zweite Priorität)? | |
|---|---|
| Bitfehlerrate | Senderleistung |

⑥

Für bestimmten Modulationstyp und gewünschten BER - Wert geforderten Wert des $E_s/N$ - Faktor berechnen

$E_s N$ [dB]

15
10
5
0
-5

QPSK - Modulation

BER

$10^{-8}$  $10^{-6}$  $10^{-4}$  $10^{-2}$  1

⑦

**Fig. 9.4** Höchste Priorität für : Übertragungsgeschwindigkeit

③

Für bestimmten Modulationstyp und gewünschten
BER - Wert geforderten Wert des $E_s/N$ - Faktor berechnen

Was ist wichtiger (zweite Priorität)?

| Übertragungs-geschwindigkeit | reduzierte Senderleistung |

maximal mögliche Leistung
des empfangenen Signals

$$P_{rec\_max} := \frac{P_{max}}{A_{link}}$$

maximal mögliche Leistung des
empfangenen Signals für
gegebene Senderleistung $P_{xmit}$

$$P_{rec} := \frac{P_{xmit}}{A_{link}}$$

④ ◀ von Fig. 9.6, 9.8

zeitl. Abstand zwischen
Symbolen, ausgedrückt in
δ - Einheiten

$$k := ceil\left(\sqrt{\frac{B \cdot E_s N \cdot N_{meas}}{P_{rec\_max}}}\right)$$

⑦

zeitl. Abstand zwischen
Symbolen, ausgedrückt in
δ - Einheiten

$$k := ceil\left(\sqrt{\frac{B \cdot E_s N \cdot N_{meas}}{P_{rec}}}\right)$$

⑦

**Fig. 9.5** Höchste Priorität für : geforderte Bitfehlerrate

Fig. 9.6 Höchste Priorität für : Sendeleistung

⑦

geforderte Leistung des von
dem Sender erzeugten Signals

$$P_{xmit} := \frac{A_{link} \cdot B \cdot E_s N \cdot N_{meas}}{k^2}$$

$\boxed{\text{von Fig. 9.4, 9.5}} \rightarrow$ ⑧

zeitl. Abstand zwischen Symbolen

$$\Delta t := k \cdot \delta$$

Symbolrate

$$D := \frac{1}{\Delta t}$$

Anzahl überlappender
Chirp - Impulse

$$n := \frac{B \cdot T}{k}$$

⑨

Fig. 9.7 Systemparameter

⑥

Systemanforderungen erfüllt ? →Ja→ Hardware gemäß berechneten Parametern einstellen

↓Nein

Kommunikation beginnen

( zum Start gehen )

Welcher Parameter ist nicht erreicht und am wichtigsten?

| Übertragungsgeschwindigkeit | geforderte Bitfehlerrate | Senderleistung |
|---|---|---|

Ja → ⬦ k = 1 ?

Was ist wichtiger ?

| Sender-leistungs-reduktion | Über-tragungsge-schwindigkeit |
|---|---|

geforderte Senderleistung $P_{xmit}$ einstellen

↓Nein

Grenze des Kommunikations-kanal ist erreicht

k : = k - 1

k : = k + 1

Senderleistung $P_{xmit}$ erhöhen

⑤

Systemlast reduzieren

②

⑥

⑥

( zum Start gehen )

Fig. 9.8 adaptives Verfahren

## Ressourcenzuweisung

Sie ist einfach auf der Zeitachse zu ordnen und zu steuern und ermöglicht immer eine Nutzung der gesamten Systemkapazität, um die best mögliche Effizienz zu leiten.

### Beispiel der Ressourcenzuweisung für TDMA - Systeme

zugewiesene Ressourcen sind:

• Leistung des ausgestrahlten Signals für jeden Zeitslot

• Dauer jedes Zeitslots

wobei:

| | |
|---|---|
| $n_0, n_1, n_2, \ldots, n_m$ | Anzahl der überlappeden Impulse für Zeitslots |
| $P_{max}$ | maximal erlaubte Leistung des Senders |
| $P_{S0}, P_{S1}, P_{S2}, \ldots, P_{Sm}$ | zu gwiesene Senderleistung für Zeitslot Nummer 0, 1,2, ... , m |
| $S_0$ | dem Zeitequalistionsverfahren zugewiesener Zeitslot Nummer 0 |
| $S_1$ | dem Organisationskanal zugewiesener Zeitslot Nummer 1 |
| $S_2$ | dem ersten Verkehrskanal zugewiesener Zeitslot Nummer 2 |
| $S_3$ | dem zweiten Verkehrskanal zugewiesener Zeitslot Nummer 3 |
| $S_4$ | dem dritten Verkehrskanal zugewiesener Zeitslot Nummer 4 |
| $S_m$ | dem letzten Verkehrskanal zugewiesener Zeitslot Nummer m |
| $T_F$ | Dauer des Rahmens |
| $T_{S0}, T_{S1}, T_{S2}, \ldots, T_{Sm}$ | Dauer des Zeitslots Nummer 0, 1, 2, ... , m |

$$T_F = \sum_{i=0}^{m} T_{Si}$$

## Fig. 9.9 Ressourcenzuweisung für Abtastsystem mit TDMA

## Beispiel des empfangenen Signals nach
## dem Zeitentspreizungsverfahren

Für Ressourcen, die wie in Fig. 9.9 dargestellt zugewiesen werden.

**Fig. 9.10a**

**Fig. 9.10b**

$$G_i = \frac{B \cdot T}{n_i} ; \quad i = 0, 1, 2, \dots , m$$

$$U_{Si\ out} = \sqrt{G_i \cdot \frac{P_{Si} \cdot R_0}{A_{link\ i}}} = \sqrt{\frac{B \cdot T \cdot P_{Si} \cdot R_0}{n_i \cdot A_{link\ i}}}$$

**Fig. 9.10** Beispiel des empfangenen Signals

## Beispiel des empfangenen Signals nach
## dem Zeitentspreizungsverfahren
## (Fort.)

wobei:

| | |
|---|---|
| $A_{link\ 0}$, $A_{link\ 1}$, ... , $A_{link\ m}$ | Dämpfung des Links: Sender $\leftrightarrow$ Empfänger und für Zeitslot Nummer 0, 1, 2, ... , m |
| B | effektive Frequenzbandbreite des Systems |
| $G_0$, $G_{S1}$, $G_2$, ... , $G_m$ | zusätzliche Systemverstärkung für Zeitslots 0, 1, 2, ... , m |
| $k_0$, $k_1$, $k_2$, ... , $k_m$ | zeitl. Distanz zwischen Symbolen (ausgedrückt als ganzzahliges Vielfaches der $\delta$ - Zeit) für Zeitlslots 0, 1, 2, ... , m |
| $R_0$ | Nominalwert des Lastwiderstands |
| T | Dauer des Chirpsignals |
| $\Delta t_0$, $\Delta t_1$, $\Delta t_2$, ... , $\Delta t_m$ | zeitl. Distanz zwischen Symbolen für Zeitslot 0, 1, 2, ... , m |
| $U_{S0\ out}$, $U_{S1\ out}$, ... , $U_{Sm\ out}$ | Amplitude des zeitentspreizten Symbols für Zeitslot Nummer 0, 1, ... , m (beispielweise beim Ausgang von der dispersiven Verzögerungsleitung $\rightarrow$ siehe Fig. 9.2) |

Amplitude des zeitentspreizten Symbols

$$U_{S0\ out} = \sqrt{\frac{B \cdot T \cdot P_{S0} \cdot R_0}{A_{link\ 0}}}$$   Impulsamplitude für Kanal equalisationsverfahren

$$U_{S1\ out} = \sqrt{\frac{2 \cdot P_{S1} \cdot R_0}{A_{link\ 1}}}$$   Amplitude des Symbols für den Organisationskanal

$$U_{S2\ out} = \sqrt{\frac{4 \cdot P_{S2} \cdot R_0}{A_{link\ 2}}}$$   Amplitude des Symbols für den ersten Verkehrskanal

$$U_{S3\ out} = \sqrt{\frac{1 \cdot P_{S3} \cdot R_0}{A_{link\ 3}}}$$   Amplitude des Symbols für den zweiten Verkehrskanal

$$U_{S4out} = \sqrt{\frac{1 \cdot P_{S4} \cdot R_0}{A_{link\ 4}}}$$   Amplitude des Symbols für den dritten Verkehrskanal

$$U_{Sm\ out} = \sqrt{\frac{1 \cdot P_{Sm} \cdot R_0}{A_{link\ m}}}$$   Amplitude des Symbols für den letzten Verkehrskanal

## Fig. 9.11 Beispiel des empfangenen Signals (Fort.)

## Modifizierte Ressourcenzuweisung gemäß veränderten Systemanforderungen

- weniger zugewiesene Zeit für Zeitslot $S_2$ und $S_3$
- weniger zugewiesene Senderleistung für Zeitslot $S_3$
- mehr zugewiesene Zeit für Zeitslot $S_4$

Nach Modifikation empfangenes Signal kann wie unten schematisch dargestellt werden.

Fig. 9.12 Ressourcenneuzuweisung

**Beispiel des empfangenen Signals nach
Ressourcenzuweisung (Fort.)**

Amplitude des zeitentspreizten Symbols

$U_{S0\,out} = \sqrt{\dfrac{B \cdot T \cdot P_{S0} \cdot R_0}{A_{link\,0}}}$     Impulsamplitude für Kanalequalisationsverfahren

$U_{S1\,out} = \sqrt{\dfrac{2 \cdot P_{S1} \cdot R_0}{A_{link\,1}}}$     Amplitude des Symbols für den Organisationskanal

$U_{S2\,out} = \sqrt{\dfrac{4 \cdot P_{S2} \cdot R_0}{A_{link\,2}}}$     Amplitude des Symbols für den ersten Verkehrskanal

$U_{S3\,out} = \sqrt{\dfrac{1 \cdot P_{S3} \cdot R_0}{A_{link\,3}}}$     Amplitude des Symbols für den zweiten Verkehrskanal

$U_{S4out} = \sqrt{\dfrac{2 \cdot P_{S4} \cdot R_0}{A_{link\,4}}}$     Amplitude des Symbols für den dritten Verkehrskanal

$U_{Sm\,out} = \sqrt{\dfrac{1 \cdot P_{Sm} \cdot R_0}{A_{link\,m}}}$     Amplitude des Symbols für den letzten Verkehrskanal

# Fig. 9.13 Ressourcenneuzuweisung (Fort.)

## Leistungeinhüllende des gesendeten Signals
## nach Zeitentspreizung

Leistungshüllkurve für Spezifikation aus Fig. 9.9

Fig. 9.14 Chirpimpulsüberlappung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3403715 A1
- US 5574748 A
- WO 9820625 A
- WO 9939473 A

**In der Beschreibung aufgeführte Nicht-Patentliteratur**

- **T. KAMITAKE.** Fast Start-up of am Echo Canceller in a 2-wire Full-duplex Modem. *IEEE proc. of ICC'84,* Mai 1984, 360-364
- **K.D. KAMMAYER.** *Nachrichtenübertragung,* 1996, 181ff
- **S. QURESHI.** Adaptive Equalization. *IEEE Communications Magazine,* 20. Marz 1982, 9-16